# EUROPÄISCHE PATENTSCHRIFT

(11) **EP 3 392 007 B1**
(45) Veröffentlichungstag und Bekanntmachung des Hinweises auf die Patenterteilung: **08.06.2022**
(21) Anmeldenummer: 17400020.8
(22) Anmeldetag: 20.04.2017
(51) Int. Cl.: B27B 33/14, B23D 63/16

(54) **SCHNEIDGLIED EINER SÄGEKETTE, SÄGEKETTE MIT EINEM SCHNEIDGLIED UND FEILE ZUM FEILEN DES SCHEIDZAHNS EINER SÄGEKETTE**
CUTTING MEMBER OF A SAW CHAIN, SAW CHAIN HAVING A CUTTING MEMBER AND FILE FOR FILING THE CUTTING TEETH OF A SAW CHAIN
ÉLÉMENT DE COUPE D'UNE SCIE À CHAÎNE, SCIE À CHAÎNE COMPRENANT UN ÉLÉMENT DE COUPE ET LIME DESTINÉE À LIMER LA DENT DE COUPE D'UNE SCIE À CHAÎNE

(43) Veröffentlichungstag der Anmeldung: 24.10.2018
(73) Patentinhaber: Andreas Stihl AG & Co. KG, 71336 Waiblingen (DE)
(72) Erfinder: Lux, Thomas, 73642 Welzheim (DE); Hollmeier, Friedrich, 73635 Rudersberg, Zumhof (DE)
(74) Vertreter: Reinhardt, Annette

(56) Entgegenhaltungen:
- EP-A1- 0 292 241
- DE-A1-102006 037 330
- US-A- 3 339 254
- US-A- 5 065 658

## Beschreibung

Die Erfindung betrifft ein Schneidglied einer Sägekette der im Oberbegriff des Anspruchs 1 angegebenen Gattung, eine Sägekette mit einem Schneidglied und eine Feile zum Feilen des Schneidzahns einer Sägekette.

Aus der CA 2,054,617 A1 und der US 5,065,658 A ist ein Schneidglied einer Sägekette bekannt, das mit einer Schleifscheibe nachgeschärft werden soll. Beim Nachschärfen ergibt sich eine ebene Fläche an einer Aussparung zwischen Tiefenbegrenzer und Schneidzahn. Die am Schneidzahn gebildete Schneidfläche besitzt eine Schneidflächenkante, die im dargestellten Nachschärfzustand unmittelbar an der Unterseite des Dachabschnitts des Schneidglieds angeordnet ist. Wird der Schneidzahn weiter nachgeschärft und dabei die Schleifscheibe parallel zur Lagerstellenebene bewegt, so wandert die Schneidflächenkante in den Dachabschnitt.

Werden Schneidglieder von Hand mit einer Feile nachgeschärft, so muss der Bediener die Feile so führen, dass der Schneidwinkel, also der Winkel um den die Schneidfläche am Dachabschnitt gegenüber der Laufrichtung geneigt ist, erhalten bleibt. Gleichzeitig muss der Bediener beim Feilen sicherstellen, dass er die Feile nicht zu weit in Richtung auf die Lagerstellenebene nachführt, da dies zu einem Schwächen des Schneidzahns im Bereich der Anbindung an den Grundkörper des Schneidglieds führen kann. Dies ist insbesondere für ungeübte Bediener schwierig. Insbesondere bei Schneidgliedern mit nach hinten abfallendem Dachabschnitt erfordert das manuelle Nachschärfen mit einer Rundfeile viel Geschick, da die Feile nicht nur in horizontaler Richtung, sondern gleichzeitig auch in vertikaler Richtung nachzuführen ist. Bereits geringe Fehler in der Positionierung der Rundfeile bewirken eine deutliche Änderung des Schneidwinkels.

Aus der US 3,339,354 A geht ein Schneidezahn hervor, der mittels einer abgeflachten Rundfeile 1 nachzuschärfen ist.

Die EP 0 292 241 A1 zeigt ein Schneidglied und eine Feile zum Nachschärfen eines Schneidglieds. Die Auflagefläche für die Feile ragt bis an die Schneidfläche heran.

Der Erfindung liegt die Aufgabe zugrunde, ein Schneidglied einer Sägekette zu schaffen, das auch von einem ungeübten Bediener einfach und korrekt nachgeschärft werden kann. Eine weitere Aufgabe der Erfindung liegt darin, eine einfach nachschärfbare Sägekette mit einem Schneidglied anzugeben.

Diese Aufgabe wird bezüglich des Schneidglieds durch ein Schneidglied mit den Merkmalen des Anspruchs 1 gelöst. Bezüglich der Sägekette mit einem Schneidglied wird die Aufgabe durch eine Sägekette mit den Merkmalen des Anspruchs 9 gelöst.

Die Erfindung sieht vor, eine Auflagefläche an dem Schneidglied bereitzustellen, an der eine Feile zum Feilen des Schneidglieds aufgelegt werden kann. Beim Nachschärfvorgang kann die Feile entlang der Auflagefläche nachgeführt werden. Die Auflagefläche gibt die Richtung, in der die Feile beim Feilen geführt werden muss, also die Ausrichtung der Feile beim Nachschärfen und die Richtung, in der der Schneidzahn nachgeschärft wird, konstruktiv vor. Dadurch ist auch der Schneidwinkel, der sich beim Nachschärfvorgang ergibt, vorgegeben. Die Auflagefläche ist dabei so ausgerichtet, dass der Schneidwinkel im Dachabschnitt beim Nachschärfen erhalten bleibt. Der Schneidwinkel soll zumindest bis zu einer Nachschärfposition des Schneidzahns erhalten bleiben, bei der die Zahnspitze des Schneidzahns sich senkrecht über einer Längsmittelachse der hinteren Lagerstelle des Schneidglieds befindet.

Der Schneidwinkel ist zwischen der Zahnspitze des Schneidzahns und der Schneidfläche an einem Punkt unterhalb der Unterseite des Dachabschnitts gemessen. Die Schneidfläche kann dabei in dem Bereich, in dem der Schneidwinkel gemessen ist, gekrümmt oder gerade verlaufen. Der Schneidwinkel ist mit Blickrichtung in einer Schärfrichtung gemessen, die der Längsmittelachse einer an der Schneidfläche anliegenden Feile entspricht. Die Schärfrichtung liegt parallel zur Schneidfläche und parallel zur Auflagefläche. Beim Nachschärfen wird die Schneidfläche parallel zur Auflagefläche verschoben, da die Feile entlang der Auflagefläche nachgeführt wird. Um sicherzustellen, dass der Schneidwinkel erhalten bleibt, ist vorgesehen, dass in dieser Seitenansicht mit Blickrichtung in Schärfrichtung eine erste Verbindungslinie an der Schneidfläche und eine zweite Verbindungslinie an einer gedachten Verschiebung der Schneidfläche parallel zueinander verlaufen. Die gedachte Verschiebung ist dabei parallel zur Auflagefläche verschoben und entspricht der Lage der Schneidfläche nach dem Nachschärfen.

Die erste Verbindungslinie verbindet einen ersten Schnittpunkt, der der Schnittpunkt einer Oberkante des Dachabschnitts mit der Schneidfläche ist, mit einem zweiten Schnittpunkt, der der Schnittpunkt einer gedachten Linie mit der Schneidfläche ist. Die gedachte Linie verläuft in dieser Seitenansicht zur Oberkante des Dachabschnitts parallel und in einem Abstand, der mindestens der größten Dicke des Dachabschnitts entspricht. Die gedachte Linie liegt demnach an der Schneidfläche an der Unterseite des Dachabschnitts oder zwischen der Unterseite des Dachabschnitts und der Lagerstellenebene. Die gedachte Linie verläuft zur Oberkante des Dachabschnitts parallel. Der erste Schnittpunkt liegt demnach an der Oberkante und der zweite Schnittpunkt an der Unterseite des Dachabschnitts oder unterhalb der Unterseite des Dachabschnitts, wobei sowohl der erste als auch der zweite Schnittpunkt an der Schneidfläche liegen. Eine zweite Verbindungslinie verbindet einen dritten Schnittpunkt und einen vierten Schnittpunkt miteinander, die die entsprechenden Punkte an der gedachten Verschiebung der Schneidfläche sind. Der dritte Schnittpunkt ist der Schnittpunkt der Oberkante des Dachabschnitts mit der gedachten Verschiebung der Schneidfläche. Der vierte Schnittpunkt ist der Schnittpunkt der gedachten Linie mit der gedachten Verschiebung der Schneidfläche. Die zweite Verbindungslinie verbindet den dritten Schnittpunkt mit dem vierten Schnittpunkt.

Vorteilhaft ist die Auflagefläche so ausgerichtet, dass ein Nachschärfen des Schneidzahns bis in eine Position möglich ist, in der die Zahnspitze des Schneidzahns senkrecht zur Laufrichtung hinter der Längsmittelachse der hinteren Lagerstelle liegt. Hierzu ist vorteilhaft vorgesehen, dass der Abstand der gedachten Linie zur Oberkante des Dachabschnitts um mindestens 0,8 mm größer als die größte Dicke des Dachabschnitts ist. Dadurch bleibt der Schneidwinkel auch beim Nachschärfen der Nachschärffläche hinter die Längsmittelachse der hinteren Lagerstelle erhalten.

Die Auflagefläche ist dazu vorgesehen, dass der Bediener eine Feile auf die Auflagefläche auflegen und beim Feilen entlang der Auflagefläche nachführen kann. Um bereits beim ersten Nachschärfen eine gute Führung für die Feile zu erreichen, ist vorgesehen, dass die in Laufrichtung gemessene Länge der Auflagefläche beim nicht nachgeschärften Schneidglied mindestens 3 mm beträgt. Beim Nachschärfen vergrößert sich die Länge der Auflagefläche entsprechend dem Weg, um den die Feile entgegen der Laufrichtung entlang der Auflagefläche nachgeführt wird.

Die geschärfte Schneidfläche besitzt einen ersten Schneidflächenabschnitt und einen winklig hierzu verlaufenden, zweiten Schneidflächenabschnitt. Die geschärfte Schneidfläche ist die Fläche des Schneidglieds, die beim Nachschärfen gefeilt wird. Der erste Schneidflächenabschnitt und der zweite Schneidflächenabschnitt sind bevorzugt ebene Flächen. Der zweite Schneidflächenabschnitt ist mindestens teilweise am Dachabschnitt ausgebildet. Der erste Schneidflächenabschnitt und der zweite Schneidflächenabschnitt grenzen an einer Schneidflächenkante aneinander an. Die Schneidflächenkante ist so angeordnet, dass der Abstand der Schneidflächenkante zur Ebene der Auflagefläche höchstens um 0,2 mm größer als der senkrecht zur Ebene der Auflagefläche gemessene kleinste Abstand der Unterseite des Dachabschnitts zur Ebene der Auflagefläche ist. Der senkrecht zur Auflagefläche gemessene Abstand ist dabei jeweils zur Ebene der Auflagefläche, also zur Verlängerung der Auflagefläche, gemessen. In besonders bevorzugter Gestaltung ist der Abstand der Schneidflächenkante zur Ebene der Auflagefläche kleiner als der kleinste Abstand der Unterseite des Dachabschnitts zur Ebene der Auflagefläche oder gleich dem kleinsten Abstand der Unterseite des Dachabschnitts zur Ebene der Auflagefläche. Dadurch kann der Schneidzahn bis nahe an das in Laufrichtung hinten liegende Ende des Schneidezahns nachgeschärft werden, ohne dass die Schneidflächenkante beim Nachschärfen in den Dachabschnitt wandert.

Für ein Schneidglied, das zwei winklig zueinander verlaufende und insbesondere eben ausgebildete Schneidflächenabschnitte besitzt, ist bevorzugt vorgesehen, dass die Auflagefläche mit der Lagerstellenebene in der genannten Seitenansicht in Schärfrichtung einen Winkel von weniger als 5° einschließt. In bevorzugter Gestaltung verläuft die Auflagefläche zur Lagerstellenebene parallel.

Die Auflagefläche ist vorteilhaft so ausgerichtet, dass die Auflagefläche beim Nachschärfen nicht zu weit in den Grundkörper bzw. zu nah zur Lagerstellenebene bewegt wird, um eine Schwächung der Anbindung des Schneidzahns an den Grundkörper des Schneidglieds zu vermeiden. Der Grundkörper des Schneidglieds ist der Bereich des Schneidglieds, der die Lagerstellen zur Verbindung mit vor- und nachlaufenden Kettengliedern aufweist. Der Grundkörper ist dabei vorteilhaft eben ausgebildet. Der Schneidzahn und ein gegebenenfalls vorgesehener Tiefenbegrenzer sind nicht Bestandteil des Grundkörpers. Vorteilhaft erstreckt sich der Grundkörper bis an den aus der Ebene des Grundkörpers herausgebogenen Schneidzahn und gegebenenfalls bis an einen aus der Ebene des Grundköpers herausgebogenen Tiefenbegrenzer.

Vorteilhaft liegen die Längsmittelachsen der Lagerstellen in einer Lagerstellenebene. Die erste Verbindungslinie schließt mit der Lagerstellenebene vorteilhaft einen an der dem Dachabschnitt abgewandten Seite gemessenen Winkel von weniger als 90°, insbesondere von weniger als 80° ein. Dadurch wird ein gutes Schnittergebnis erreicht. Die Auflagefläche schließt mit der Lagerstellenebene in einer Blickrichtung in Laufrichtung vorteilhaft einen Winkel von weniger als 5° ein. Die Auflagefläche kann demnach quer zur Laufrichtung ein leichtes Gefälle aufweisen. In besonders bevorzugter Gestaltung verläuft die Lagerstellenebene in einer Blickrichtung in Laufrichtung, also in Querrichtung des Schneidglieds, parallel zur Lagerstellenebene. In Querrichtung des Schneidglieds ist die Lagerstellenebene demnach vorteilhaft weniger als 5° geneigt und verläuft in besonders bevorzugter Gestaltung parallel zur Lagerstellenebene.

Vorteilhaft liegt eine am Dachabschnitt ausgebildete Schneidkante in Laufrichtung hinter der Auflagefläche. Die Schneidkante ist insbesondere an einer Oberseite des Dachabschnitts ausgebildet. Die Schneidkante liegt dabei in einer Draufsicht auf das Schneidglied so, dass die Schneidkante die Auflagefläche nicht überdeckt. Die Schneidkante, die vorteilhaft am in Laufrichtung vorlaufend angeordneten Ende des Schneidzahns am Dachabschnitt ausgebildet ist, liegt in einer Seitenansicht in Blickrichtung der Schärfrichtung vorteilhaft vollständig hinter der Auflagefläche. An der Schneidkante ist vorteilhaft eine Zahnspitze ausgebildet, die in dieser Seitenansicht hinter der Auflagefläche liegt. Die Schneidkante und insbesondere die Zahnspitze liegen in dieser Seitenansicht bezüglich der Lagerstellenebene vorteilhaft vertikal über der geschärften Schneidfläche und mit horizontalem Abstand zur Auflagefläche. Der in dieser Seitenansicht parallel zur Lagerstellenebene gemessene Abstand beträgt im nicht nachgeschärften Zustand vorteilhaft 0 bis 5% der senkrecht zur Auflagefläche zwischen der Auflagefläche und der Zahnspitze gemessenen Höhe des Schneidzahns. Die Schneidkante befindet sich demnach bezogen auf die Höhe des Schneidzahns im nicht nachgeschärften Zustand vergleichsweise nah hinter der Auflagefläche und im nachgeschärften Zustand vorteilhaft um einen Abstand, der etwa ein Viertel der Zahnhöhe beträgt, hinter der Auflagefläche. Bei einem Schneidglied, bei dem die Schneidfläche zwei winklig zueinander verlaufende Schneidflächenabschnitte besitzt, verringert sich bei einer geneigten Ausrichtung der Auflagefläche zur Oberkante des Dachabschnitts die Zahnhöhe mit zunehmendem Nachschärfgrad. Der parallel zur Auflagefläche gemessene Abstand zwischen der Schneidkante und der Auflagefläche, insbesondere zwischen der Zahnspitze und der Auflagefläche, nimmt bei einem Schneidglied, bei dem die Schneidfläche zwei winklig zueinander verlaufende Schneidflächenabschnitte besitzt, vom ungeschärften Zustand zum vollständig nachgeschärften Zustand vorteilhaft auf 15% bis 30%, insbesondere auf 20% bis 25% der Zahnhöhe zu.

Vorlaufend zu dem Schneidzahn ist vorteilhaft ein Tiefenbegrenzer angeordnet. Zwischen dem Schneidzahn und dem Tiefenbegrenzer ist vorteilhaft eine Aussparung gebildet, wobei die Aussparung in Richtung auf die Lagerstellenebene mindestens teilweise von der Auflagefläche begrenzt ist. In bevorzugter Gestaltung ist die Aussparung in Richtung auf die Lagerstellenebene vollständig von der Auflagefläche begrenzt, so dass der gesamte Boden der Aussparung durch die Auflagefläche gebildet ist. Dadurch kann auf einfache Weise eine sehr lange Auflagefläche und dadurch ein sicheres Führen einer Feile beim Nachschärfen erreicht werden. Es kann jedoch auch vorgesehen sein, dass die Auflagefläche nur den unmittelbar vorlaufend zur Schneidfläche angeordneten Bereich des Bodens der Aussparung einnimmt.

Für eine Sägekette mit einem Schneidglied und einem Verbindungsglied, das bezogen auf die Laufrichtung neben dem Schneidglied angeordnet ist, ist vorgesehen, dass das Verbindungsglied eine Oberseite besitzt und dass der Abstand der Oberseite des Verbindungsglieds zur Lagerstellenebene kleiner als der Abstand der Auflagefläche zur Lagerstellenebene ist. Dadurch liegt die Oberseite des Verbindungsglieds auf der der Schneidfläche abgewandten Seite der durch die Auflagefläche definierten Ebene. Die Oberseite des Verbindungsglieds ragt demnach nicht bis zu einer an der Auflagefläche aufliegenden Feile und behindert die Auflage der Feile an der Auflagefläche nicht.

Für eine Feile zum Feilen eines Schneidzahns einer Sägekette ist vorteilhaft vorgesehen, dass die Feile in einem Querschnitt eine unbehauene Führungsfläche und mindestens eine in Umfangsrichtung an die Führungsfläche angrenzende Feilenfläche besitzt. Mit der unbehauenen Führungsfläche kann die Feile an der Auflagefläche aufgesetzt werden. Die Feilenfläche, die an die Führungsfläche angrenzt, ist vorteilhaft zur Anlage an der Schneidfläche und Bearbeitung der Schneidfläche vorgesehen. Dadurch, dass die Feilenfläche unmittelbar an die unbehauene Führungsfläche angrenzt, und die Führungsfläche selbst unbehauen ist, kann auf einfache Weise erreicht werden, dass die Auflagefläche beim Nachschärfen verlängert wird und ihre Ausrichtung dabei beibehält. Dadurch kann auch für einen ungeübten Benutzer ein einfaches und exaktes Nachschärfen ermöglicht werden. Die parallel zur Führungsfläche gemessene Breite der Feile vergrößert sich vorteilhaft in mindestens einem Bereich des Querschnitts der Feile mit steigendem Abstand von der Führungsfläche. Dadurch kann auf einfache Weise ein Hinterschnitt an der Schneidfläche hergestellt werden, ohne dass der Bereich der Anbindung des Schneidzahns an den Grundkörper des Schneidglieds zu sehr geschwächt wird. Bevorzugt vergrößert sich der Abstand der Feilenfläche zu einer Mittelebene der Feile, die die Längsmittelachse der Feile enthält und senkrecht zur Führungsfläche verläuft, in einem ersten Bereich der Feile mit steigendem Abstand von der Führungsfläche. In einem zweiten Bereich der Feile, dessen Abstand zur Führungsfläche größer als der Abstand des ersten Bereichs zur Führungsfläche ist, ist vorteilhaft vorgesehen, dass sich der Abstand der Feilenfläche zu der Mittelebene der Feile mit steigendem Abstand zur Führungsfläche verringert. Dadurch wird durch den ersten Bereich und den zweiten Bereich der Feile ein Hinterschnitt an der Schneidfläche erzeugt.

Am Schneidzahn ist vorteilhaft ein Hinterschnitt durch die Schneidfläche gebildet. Die Schneidfläche besitzt vorteilhaft mindestens zwei Normalen, die sowohl zur Auflagefläche als auch zur Lagerstellenebene in einem Winkel verlaufen, der von 0° und 90° verschieden ist.

Insbesondere für ein Schneidglied, das zwei winklig zueinander ausgerichtete Schneidflächen besitzt, die bevorzugt jeweils eben verlaufen, ist vorgesehen, dass die Feile eine in Umfangsrichtung an die erste Feilenfläche angrenzende zweite Feilenfläche besitzt, wobei die Führungsfläche mit der ersten Feilenfläche einen ersten Winkel einschließt, der mehr als 90° beträgt, und wobei die Führungsfläche mit der zweiten Feilenfläche einen zweiten Winkel einschließt, der weniger als 90° beträgt. Dadurch kann eine vergleichsweise breite Anbindung des Schneidezahns an den Grundkörper des Schneidglieds und gleichzeitig ein vorteilhafter Schneidwinkel erreicht werden. Vorteilhaft bildet die erste Feilenfläche den ersten Bereich der Feile, und die zweite Feilenfläche bildet den zweiten Bereich der Feile.

Vorteilhaft besitzen die erste Feilenfläche und die zweite Feilenfläche das gleiche in Umfangsrichtung gemessene Kantenmaß. In bevorzugter Gestaltung besitzt die Feile zwei einander gegenüberliegende unbehauene Führungsflächen, zwei einander gegenüberliegende erste Feilenflächen und zwei einander gegenüberliegende zweite Feilenflächen. Dadurch kann die Feile in mindestens zwei Orientierungen zum Nachschärfen genutzt werden. In besonders bevorzugter Gestaltung besitzt die Feile einen Sechskantquerschnitt. Vorteilhaft beträgt die Breite der Führungsfläche mindestens 3 mm. Dadurch wird eine gute Führung der Feile durch die Führungsfläche ermöglicht.

Eine Anordnung aus einer Sägekette mit einem Schneidglied und einer Feile ist vorteilhaft so ausgebildet, dass der Winkel zwischen der Auflagefläche und dem ersten Schneidflächenabschnitt des Schneidglieds dem Winkel zwischen der Führungsfläche und der ersten Feilenfläche der Feile entspricht und dass der Winkel zwischen der Auflagefläche und dem zweiten Schneidflächenabschnitt des Schneidglieds dem Winkel zwischen der Führungsfläche und der zweiten Feilenfläche der Feile entspricht.

Beim Nachschärfen eines erfindungsgemäßen Schneidglieds ist vorgesehen, dass der Winkel des am Dachabschnitt ausgebildeten Bereichs der Schneidfläche vom Ausgangszustand des Schneidglieds bis in den vollständig nachgeschärften Zustand weitgehend unverändert bleibt. Dies wird vorteilhaft dadurch erreicht, dass die Auflagefläche bereits bei der Herstellung des Schneidglieds in der korrekten und auf die Feile abgestimmten Orientierung hergestellt wird und die Feile ausschließlich auf der unter ihr befindlichen Auflagefläche gleitend entlang bewegt wird, ohne dass ein Materialabtrag an der Auflagefläche erfolgt. Dies kann dadurch erreicht werden, dass die Feile mindestens eine unbehauene Auflagefläche besitzt, die zur Auflage auf der Auflagefläche vorgesehen ist.

Ausführungsbeispiele der Erfindung werden im Folgenden anhand der Zeichnung erläutert. Es zeigen:
- Fig. 1 und Fig. 2: Seitenansichten eines Ausschnitts einer Sägekette,
- Fig. 3: einen Schnitt entlang der Linie III-III in Fig. 1,
- Fig. 4 und Fig. 5: perspektivische Darstellungen des Ausschnitts der Sägekette in einer Blickrichtung, die der Schärfrichtung entspricht,
- Fig. 6: eine Seitenansicht des Schneidglieds der Sägekette,
- Fig. 7: eine Draufsicht auf das Schneidglied in Richtung des Pfeils VII in Fig. 6,
- Fig. 8: einen Schnitt entlang der Linie VIII-VIII in Fig. 6,
- Fig. 9: eine Seitenansicht des Ausschnitts der Sägekette mit daran angeordneter Feile,
- Fig. 10: eine Seitenansicht in Richtung des Pfeils X in Fig. 9,
- Fig. 11 und Fig. 12: perspektivische Darstellungen mit Blickrichtung in Schärfrichtung in einem ersten Nachschärfzustand des Abschnitts der Sägekette,
- Fig. 13: eine Schnittdarstellung der Sägekette in dem in den Fig. 11 und 12 gezeigten Nachschärfzustand entlang der Linie III-III in Fig. 1,
- Fig. 14 und Fig. 15: perspektivische Darstellungen des Abschnitts der Sägekette mit Blickrichtung in Schärfrichtung in einem zweiten Nachschärfzustand,
- Fig. 16: einen Schnitt durch die Sägekette in dem Nachschärfzustand aus den Fig. 14 und 15 in einem Schnitt entlang der Linie III-III in Fig. 1,
- Fig. 17: einen schematischen Querschnitt einer Feile zum Nachschärfen des in den Fig. 1 bis 16 dargestellten Schneidglieds,
- Fig. 18 bis Fig. 20: schematische Querschnittsdarstellungen von Ausführungsbeispielen von Feilen zum Nachschärfen eines erfindungsgemäßen Schneidglieds,
- Fig. 21 und Fig. 22: Seitenansichten eines Abschnitts einer nicht erfindungsgemäßen Ausführung einer Sägekette,
- Fig. 23: einen Schnitt entlang der Linie XXIII-XXIII in Fig. 21,
- Fig. 24 und Fig. 25: Seitenansichten des Abschnitts der nicht erfindungsgemäßen Ausführung einer Sägekette mit daran angeordneter, schematisch dargestellter Feile,
- Fig. 26: einen Schnitt entlang der Linie XXVI-XXVI in Fig. 24,
- Fig. 27: eine perspektivische Darstellung des Abschnitts der Sägekette aus den Fig. 21 bis 23 mit Blickrichtung in Schärfrichtung,
- Fig. 28: eine Seitenansicht des Schneidglieds der Sägekette aus den Fig. 21 bis 27,
- Fig. 29: eine Draufsicht auf das Schneidglied aus Fig. 28 in Richtung des Pfeils XXIX in Fig. 28 mit schematisch dargestellter Feile zum Nachschärfen,
- Fig. 30: eine schematische Querschnittsdarstellung einer nicht erfindungsgemäßen Feile zum Nachschärfen des Schneidglieds,
- Fig. 31: eine Seitenansicht des Schneidglieds aus Fig. 28 in vollständig nachgeschärftem Zustand.

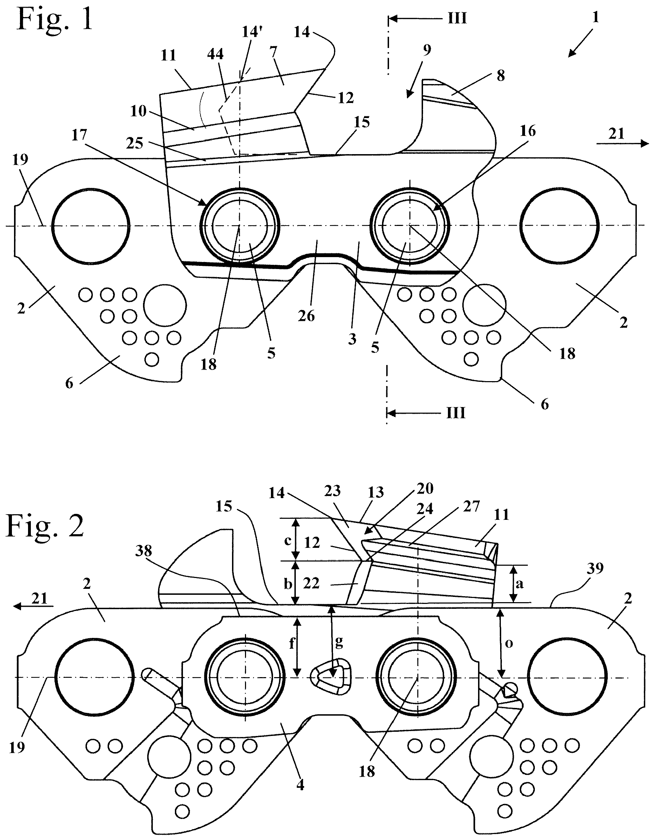

Fig. 1 zeigt in Seitenansicht einen Abschnitt einer Sägekette 1. Die Sägekette 1 besitzt Treibglieder 2 sowie Schneidglieder 3, die über Verbindungsbolzen 5 miteinander gelenkig verbunden sind. Die Sägekette 1 ist als Werkzeug für eine Motorsäge vorgesehen, in der die Sägekette 1 um eine Führungsschiene umlaufend anzuordnen ist. Dabei ragen Treibansätze 6 der Treibglieder 2 in eine Führungsnut der Führungsschiene und werden von einem Antriebsritzel der Motorsäge angetrieben. Die Sägekette 1 bewegt sich dabei in einer Laufrichtung 21 umlaufend um die Führungsschiene. Die Verbindungsbolzen 5 sind an Lagerstellen des Schneidglieds 3 angeordnet. Es ist eine in Laufrichtung 21 vorne angeordnete, vordere Lagerstelle 16 sowie eine in Laufrichtung 21 hinten liegende, hintere Lagerstelle 17 vorgesehen. Die Lagerstellen 16 und 17 besitzen jeweils Längsmittelachsen 18, die die Schwenkachsen der Glieder der Sägekette 1 bilden. Die Längsmittelachsen 18 spannen eine Lagerstellenebene 19 auf. Die Lagerstellen 16 und 17 sind in einem Grundkörper 26 des Schneidglieds 3 ausgebildet. Der Grundkörper 26 ist bevorzugt eben ausgebildet. Am Grundkörper 26 sind ein Tiefenbegrenzer 8 und ein Schneidzahn 7 angeordnet, die sich aus der Ebene des Grundkörpers 26 erheben können. Im Ausführungsbeispiel ist sowohl der Tiefenbegrenzer 8 als auch der Schneidzahn 7 aus der Grundkörperebene herausgebogen. Zwischen dem Tiefenbegrenzer 8 und dem Schneidzahn 7 ist eine Aussparung 9 ausgebildet, die in Richtung auf die Lagerstellenebene 19 von einer im Folgenden noch näher beschriebenen Auflagefläche 15 begrenzt ist. Im Ausführungsbeispiel nach Fig. 1 erstreckt sich die Auflagefläche 15 näherungsweise über den gesamten Boden der Aussparung 9.

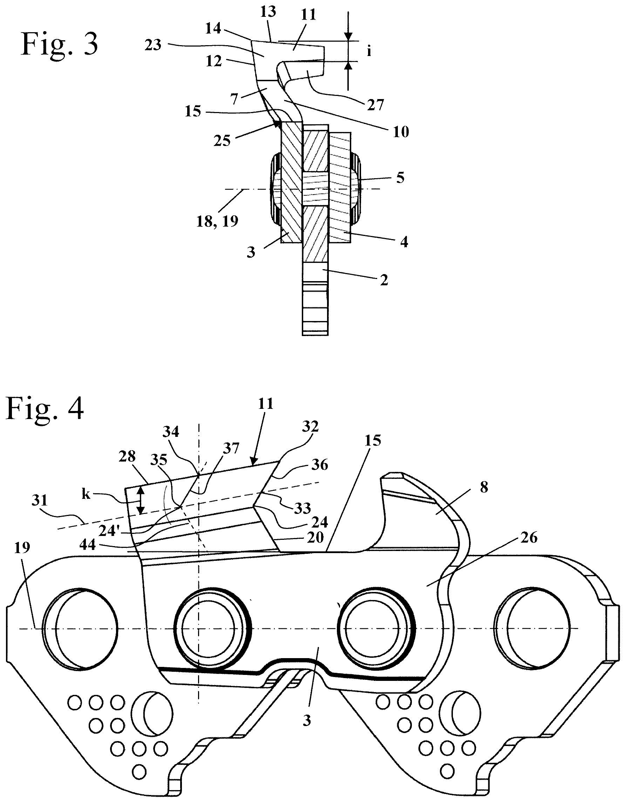

Der Schneidzahn 7 besitzt einen Zahnfuß 25, der den Bereich bezeichnet, an dem der Schneidzahn 7 am Grundkörper 26 des Schneidglieds 3 angebunden ist. Am Zahnfuß 25 ist der Schneidzahn 7 aus der Ebene des Grundkörpers 26 herausgebogen. Der Schneidzahn 7 besitzt einen Seitenabschnitt 10, an dem sich der Schneidzahn 10 mindestens in einem Abschnitt näherungsweise parallel zur Ebene des Grundkörpers 26 erstreckt, sowie einen Dachabschnitt 11, in dem der Schneidzahn 7 näherungsweise parallel zu den Längsmittelachsen 18 verläuft. Am Dachabschnitt 13 ist der Schneidzahn 7 zu einer Mittelebene der Sägekette 1 hin gebogen. Wie Fig. 3 zeigt, erstreckt sich der Dachabschnitt 11 zumindest teilweise über das dem Schneidglied 7 benachbarte Treibglied 2.

In Fig. 1 ist eine am Seitenabschnitt 10 ausgebildete erste Schneidkante 12 sowie eine Zahnspitze 14 des Schneidzahns 7 erkennbar, die zum Eingriff in ein Werkstück vorgesehen sind. Die Zahnspitze 14 ist dabei der Bereich des Schneidzahns 7, der in Laufrichtung 21 am weitesten vorne liegt. Die Zahnspitze 14 kann auch abgerundet oder gebogen ausgebildet sein.

Beim Nachschärfen des Schneidglieds 7 legt der Bediener eine Feile mit Anlage an der Schneidkante 12 auf die Auflagefläche 15 und führt die Feile entlang der Auflagefläche 15. Fig. 1 zeigt eine gedachte Verschiebung 44 der Schneidkante 12, bei der eine Zahnspitze 14' bezogen auf die Laufrichtung 21 senkrecht über der Längsmittelachse 18 der hinteren Lagerstelle 17 liegt. Die gedachte Verschiebung 44 entspricht der Kontur der Schneidkante 12 in der gezeigten Seitenansicht, wenn die Schneidkante 12 bis in die gezeigte Lage nachgeschärft wird. Fig. 1 und Fig. 2 zeigen dabei Seitenansichten auf die Sägekette 1 in Blickrichtung der Längsmittelachsen 18.

Wie Fig. 2 zeigt, ist an der der Lagerstellenebene 18 abgewandten Oberseite des Dachabschnitts 11 eine zweite Schneidkante 13 ausgebildet. Die erste Schneidkante 12 und die zweite Schneidkante 13 sind Kanten einer Schneidfläche 20, die zur gezeigten Seitenansicht geneigt verläuft. Die Schneidfläche 20 besitzt einen ersten Schneidflächenabschnitt 22, der unmittelbar an die Auflagefläche 15 angrenzt, sowie einen zweiten Schneidflächenabschnitt 23, der sich am Dachabschnitt 11 und in den darunter liegenden Bereich des Seitenabschnitts 10 erstreckt. An der Zahnspitze 14 treffen sich die Schneidkanten 12 und 13.

Als Schneidfläche 20 wird vorliegend der gesamte Bereich zwischen der Auflagefläche 15 und der zweiten Schneidkante 13 bezeichnet. Die Schneidfläche 20 muss dabei nicht vollständig mit einem zu bearbeitenden Werkstück in Kontakt kommen. Insbesondere kommt der erste Schneidflächenabschnitt 22 nicht oder nur teilweise mit einem zu bearbeitenden Werkstück in Kontakt. Die erste Schneidkante 12 verläuft an der Schneidfläche 20 an einer Seite des Schneidzahns 7 und setzt sich im Ausführungsbeispiel aus zwei geraden Schneidkantenabschnitten zusammen. Die erste Schneidkante 12 erstreckt sich von der Auflagefläche 15 bis zur Zahnspitze 14 und kommt im Ausführungsbeispiel vorteilhaft nur über einen Teil ihrer Länge mit dem zu bearbeitenden Werkstück in Kontakt. Die erste Schneidkante 12 wird beim Nachschärfen über ihre gesamte Länge nachgeschärft.

Die Schneidflächenabschnitte 22 und 23 sind im Ausführungsbeispiel jeweils eben ausgebildet und treffen an einer Schneidflächenkante 24 aufeinander. Die Schneidflächenkante 24 verläuft parallel zur Auflagefläche 15. Im Ausführungsbeispiel ist die Schneidflächenkante 24 in Querrichtung der Sägekette 1 parallel zu den Längsmittelachsen 18 der Lagerstellen 16 und 17 ausgerichtet. Der Dachabschnitt 11 besitzt eine der Lagerstellenebene 19 zugewandte Unterseite 27. Die Unterseite 27 besitzt einen senkrecht zur Laufrichtung 21 gemessenen Abstand a zur Auflagefläche 15. Der Abstand a ist dabei der kleinste Abstand der Unterseite 27 zur Auflagefläche 15 und im Ausführungsbeispiel an dem in Laufrichtung 21 hinten liegenden Bereich des Dachabschnitts 11 gemessen. Die Auflagefläche 15 verläuft im Ausführungsbeispiel parallel zur Lagerstellenebene 19. Die Schneidflächenkante 24 besitzt zur Auflagefläche 15 einen senkrecht zur Laufrichtung 21 gemessenen Abstand b, der kleiner oder geringfügig größer als der Abstand a ist. Vorteilhaft ist der Abstand b um weniger als 2 mm größer als der Abstand a. In dem in den Fig. 1 und 2 gezeigten ungeschärften Zustand besitzt die Zahnspitze 14 zur Schneidflächenkante 24 einen senkrecht zur Laufrichtung gemessenen Abstand c. Im Ausführungsbeispiel sind die Abstände b und c in ungeschärftem Zustand näherungsweise gleich groß.

Die Auflagefläche 15 besitzt zur Lagerstellenebene 19 einen Abstand g. An der dem Schneidglied 3 abgewandten Seite der Treibglieder 2 ist ein Verbindungsglied 4 angeordnet. Das Verbindungsglied 4 besitzt eine Oberseite 38, die auf der gleichen Seite der Lagerstellenebene 19 liegt wie der Schneidzahn 7. Die Oberseite 38 besitzt zur Lagerstellenebene 19 einen Abstand f, der kleiner als der Abstand g ist. Dadurch liegt die Oberseite 38 des Verbindungsglieds 4, das neben dem Schneidglied 3 angeordnet ist, niedriger als die Auflagefläche 15, also in Richtung auf die Lagerstellenebene 15 hin versetzt. Die Treibglieder 2 besitzen eine Oberseite 39, die zur Lagerstellenebene 19 einen Abstand o besitzt. Auch der Abstand o ist im Ausführungsbeispiel kleiner als der Abstand g. Im Ausführungsbeispiel ist der Abstand o jedoch geringfügig größer als der Abstand f. Die Abstände f, g und o und die Ausrichtung der Auflagefläche 15 sind so gewählt, dass eine Feile zum Nachschärfen des Schneidzahns 7 auch in vollständig nachgeschärftem Zustand nicht mit der Oberseite 38 des Verbindungsglieds 4 oder der Oberseite 39 des Treibglieds 2 in Kontakt kommt, wenn die Feile auf der Auflagefläche 15 geführt wird.

Wie Fig. 3 zeigt, durchragt der Verbindungsbolzen 5 das Schneidglied 3, das Verbindungsglied 4 sowie das mittig zwischen Schneidglied 3 und Verbindungsglied 4 angeordnete Treibglied 2. Wie Fig. 3 auch zeigt, verläuft die Auflageebene 15 in der gezeigten Schnittdarstellung senkrecht zur Laufrichtung 21 parallel zur Lagerstellenebene 19. In nicht nachgeschärftem Zustand ist die Auflagefläche 15 am ebenen Grundkörper 26 des Schneidglieds 3 angeordnet und erstreckt sich nicht in den aus der Grundkörperebene herausgebogenen Schneidzahn 7. Wie Fig. 3 auch zeigt, besitzt der Dachabschnitt 11 eine größte Dicke i. Die Dicke i ist senkrecht zur Lagerstellenebene 19 gemessen. Die Dicke des Dachabschnitts 11 nimmt vom Seitenabschnitt 10 in Richtung auf das freie Ende des Dachabschnitts 11 hin ab. Im Ausführungsbeispiel ist die Dicke i in Längsrichtung des Dachabschnitts 11, also in Laufrichtung 21, konstant. Es kann jedoch auch vorgesehen sein, dass die Dicke i in Laufrichtung 21 abnimmt oder zunimmt.

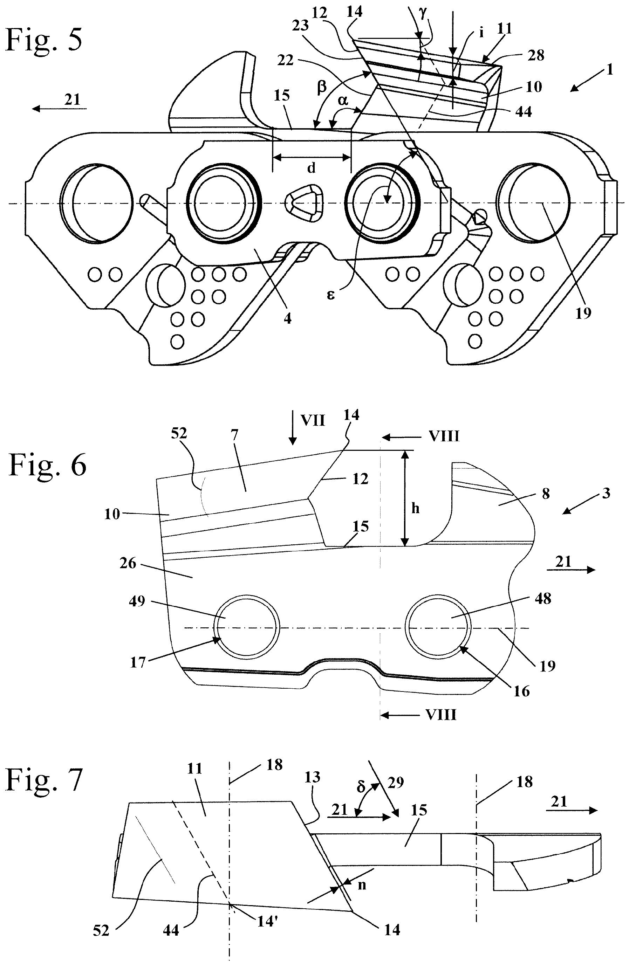

Fig. 4 zeigt den in den Fig. 1 und 2 gezeigten Abschnitt der Sägekette 1 in einer perspektivischen Darstellung mit einer Blickrichtung in einer Schärfrichtung 29, die in Fig. 7 gezeigt ist. Die Schärfrichtung 29 ist die Richtung, in der eine Feile zum Nachschärfen des Schneidzahns 7 zu führen ist. Die Schneidfläche 20 und die Auflagefläche 15 sind parallel zur Schärfrichtung 29 ausgerichtet und erscheinen in der Seitenansicht in Schärfrichtung 29 als Linien. Im Ausführungsbeispiel liegt die Schärfrichtung 29 zur Laufrichtung 21 um einen Winkel δ geneigt, der kleiner als 90° ist. Der Winkel δ ist in Fig. 7 gezeigt und beträgt vorteilhaft 20° bis 80°, insbesondere 40° bis 70°.

Wie Fig. 4 zeigt, besitzt der Dachabschnitt 11 in der Seitenansicht mit Blickrichtung in Schärfrichtung 29 eine Oberkante 28. Die Oberkante 28 ist der von der Lagerstellenebene 19 entfernt liegende, in der Seitenansicht als Linie erscheinende Abschnitt des Dachabschnitts 11. In Fig. 4 ist eine gedachte Linie 31 eingezeichnet, die parallel zur Oberkante 28 verläuft. Die gedachte Linie 31 besitzt zur Oberkante 28 einen Abstand k, der senkrecht zur Lagerstellenebene 19 gemessen ist und der mindestens so groß ist wie die größte Dicke i des Dachabschnitts 11 (Fig. 3). Die gedachte Linie 31 liegt demnach an der Unterseite 27 oder unterhalb der Unterseite 27 des Dachabschnitts 11. Vorteilhaft ist der Abstand k mindestens um 0,8 mm größer als die maximale Dicke i.

In der in Fig. 4 gezeigten Seitenansicht ist ein erster Schnittpunkt 32 eingezeichnet, der der Schnittpunkt der Oberkante 28 mit der Schneidfläche 20 ist. Ein zweiter Schnittpunkt 33 ist der Schnittpunkt der Schneidfläche 20 mit der gedachten Linie 31. Die beiden Schnittpunkte 32 und 33 sind in Fig. 4 durch eine erste, gedachte Verbindungslinie 36 verbunden. Die erste Verbindungslinie 36 liegt im Ausführungsbeispiel vollständig in der Schnittfläche 20. Es kann auch vorgesehen sein, dass die Schnittfläche 20 gebogen verläuft, so dass die erste Verbindungslinie 36 nicht vollständig in der Schnittfläche 20 liegt. Die erste Verbindungslinie 36 gibt die Neigung des Schneidzahns 7 im Bereich des Dachabschnitts 11 genau oder näherungsweise an.

Durch das Nachschärfen des Schneidzahns 7 verlagert sich die Schneidfläche 20 parallel zur Auflagefläche 15 und entlang der Verlängerung der Auflagefläche 15 relativ zum Grundkörper 26 des Schneidglieds 3. Die verlagerte Schneidfläche 20 ist als gedachte Verschiebung 44 in Fig. 4 mit gestrichelter Linie dargestellt. Die in Fig. 4 gezeigte gedachte Verschiebung 44 entspricht einer Lage des Schneidzahns 7, bei der die Zahnspitze 14' der gedachten Verschiebung 44 in einer Draufsicht senkrecht zur Lagerstellenebene 19 auf der Längsmittelachse 18 der hinteren Lagerstelle 17 liegt. Aufgrund der perspektivischen Darstellung liegt die Längsmittelachse 18 in Fig. 4 zur Blattebene nicht senkrecht. Die tatsächliche Anordnung ist in der Draufsicht in Fig. 7 erkennbar. In der gezeigten Seitenansicht ist ein dritter Schnittpunkt 34 der Schnittpunkt der Verschiebung 44 mit der Oberkante 28, und ein vierter Schnittpunkt 35 ist der Schnittpunkt der Verschiebung 44 mit der gedachten Linie 31. Die Schnittpunkte 34 und 35 sind durch eine zweite, gedachte Verbindungslinie 37 miteinander verbunden. Dadurch, dass sowohl der zweite Schnittpunkt 33 als auch der vierte Schnittpunkt 35 am gleichen, zweiten Schneidflächenabschnitt 23 (Fig. 3) liegen und der zweite Schneidflächenabschnitt 23 eben ausgebildet ist, verlaufen die Verbindungslinien 35 und 36 parallel zueinander. Im Ausführungsbeispiel ist der Abstand k so gewählt, dass der vierte Schnittpunkt 35 an der verschobenen Schneidflächenkante 24' liegt. Die Schneidflächenkante 24 bewegt sich beim Nachschärfen parallel zur Auflageebene 15. Wird der Abstand k größer gewählt, so sind die Verbindungslinien 36 und 37 nicht mehr parallel zueinander, da der zweite Schnittpunkt 33 im zweiten Schneidflächenabschnitt 23 liegt und der vierte Schnittpunkt 35 beim Nachschärfen in den ersten Schneidflächenabschnitt 22 wandert und die zweite Verbindungslinie 37 dadurch einen steileren Verlauf erhält als die erste Verbindungslinie 36.

Fig. 5 zeigt den Abschnitt der Sägekette 1 in perspektivischer Darstellung in Schärfrichtung 29 von der gegenüberliegenden Seite der Sägekette 1. In dieser Ansicht liegt das Verbindungsglied 4 in Blickrichtung vor dem Schneidglied 3. Wie Fig. 5 zeigt, schließt der erste Schneidflächenabschnitt 22, der vollständig am Seitenabschnitt 10 des Schneidzahns 7 ausgebildet ist, mit der Auflagefläche 15 einen Winkel α ein. Der Winkel a ist größer als 90°. Im Ausführungsbeispiel ist ein Winkel α von 100° bis 160°, insbesondere von 110° bis 140°, vorzugsweise von etwa 120° vorgesehen. Die Auflagefläche 15 schließt mit dem zweiten Schneidflächenabschnitt 23, an dem die Zahnspitze 14 angeordnet ist, einen Winkel β ein, der kleiner als 90 ° ist. Vorteilhaft beträgt der Winkel β 20° bis 80°, insbesondere 40° bis 70°, bevorzugt etwa 60°. Durch die Winkel α und β ist ein Hinterschnitt am Schneidzahn 7 gebildet. Der in Laufrichtung 21 am weitesten hinten liegende Bereich der Schneidfläche 20 liegt zwischen der Dachschneide 13 und der Auflagefläche 15. Dadurch kann sowohl eine ausreichend breite Anbindung des Schneidzahns 7 am Zahnfuß 25 (Fig. 1) als auch ein günstiger Schneidwinkel ε erreicht werden. Im Ausführungsbeispiel ist die Auflagefläche 15 parallel zur Lagerstellenebene 19 ausgerichtet. Der zweite Schneidflächenabschnitt 23 schließt mit der Lagerstellenebene 19 den Schneidwinkel ε ein, der dem Winkel β entspricht. Der Schneidwinkel ε ist vorteilhaft für eine gute Zerspanung und Spanabfuhr ausgelegt. Der Schneidwinkel ε entspricht dem Winkel, den die Verbindungslinien 36 bzw. 37 mit der Lagerstellenebene 19 einschließen, da die Verbindungslinien 36 und 37 im Ausführungsbeispiel vollständig in dem zweiten Schneidflächenabschnitt 23 liegen. Die Schneidfläche 20 besitzt im ersten Schneidflächenabschnitt 22 eine Normale, die mit der Auflagefläche 15 und der Lagerstellenebene 19 einen von 0° und von 90° verschiedenen Winkel einschließt. Entsprechend besitzt der zweite Schneidflächenabschnitt 23 eine Normale, die mit der Auflagefläche 15 und der Lagerstellenebene 19 einen von 0° und von 90° verschiedenen Winkel einschließt.

Wie Fig. 5 zeigt, ist die Oberkante 28 zur Laufrichtung 21 ebenfalls geneigt. Die Oberkante 28 fällt dabei in Laufrichtung 21 ab. Die Oberkante 28 schließt mit der Laufrichtung 21 einen Freiwinkel γ ein, der in Fig. 5 zu einer Parallelen zur Laufrichtung 21 eingezeichnet ist. Der Freiwinkel γ beträgt vorteilhaft mindestens 3°, insbesondere mindestens 5°. Wie Fig. 5 auch zeigt, besitzt die Auflagefläche 15 in der gezeigten Seitenansicht eine in Laufrichtung 21 gemessene Länge d.

Fig. 6 zeigt das Schneidglied 3 in Seitenansicht. Wie Fig. 6 zeigt, besitzt der Grundkörper 26 des Schneidglieds 3 eine vordere Lagerstelle 48 und eine hintere Lagerstelle 49, die im Ausführungsbeispiel als Öffnungen für die Verbindungsbolzen 5 ausgebildet sind. Auch eine andere Verbindung des Schneidglieds 3 mit benachbarten und den vorlaufenden und nachlaufenden Treibgliedern 2 und Verbindungsgliedern 4 kann jedoch vorteilhaft sein.

Wie Fig. 6 auch zeigt, besitzt der Schneidzahn 7 eine Höhe h, die von der Zahnspitze 14 zur Auflagefläche 15 und senkrecht zur Lagerstellenebene 19 gemessen ist. In den Fig. 6 und 7 ist eine Markierung 52 am Seitenabschnitt 10 und am Dachabschnitt 11 erkennbar, die die Lage der Schneidfläche 20 in maximal nachgeschärftem Zustand des Schneidglieds 3 zeigt.

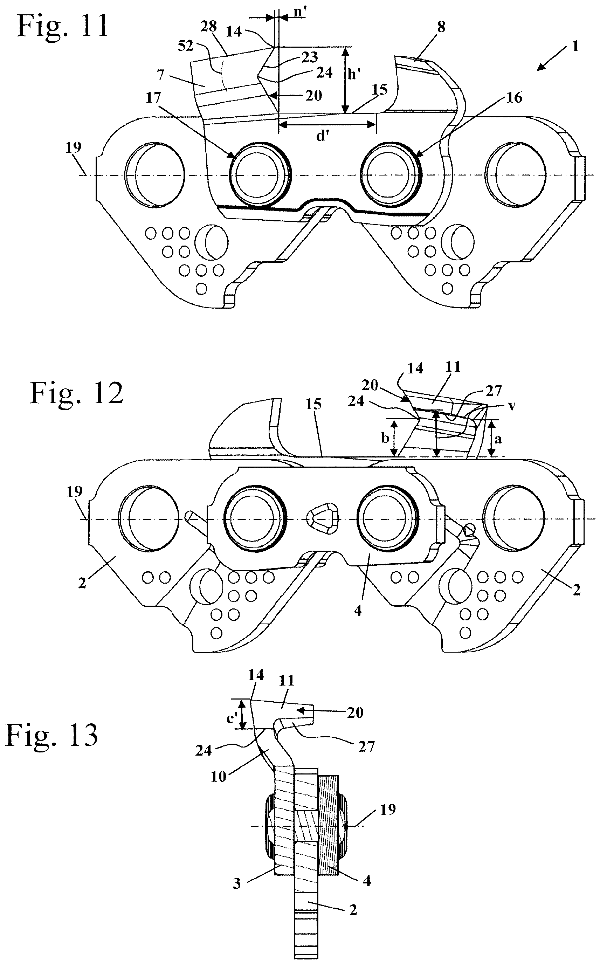

Wie Fig. 7 zeigt, liegt die Schneidkante 13 in Laufrichtung 21 in nicht nachgeschärftem Zustand hinter der Auflagefläche 15. Die Schneidkante 13 liegt dabei in einer Draufsicht senkrecht zur Lagerstellenebene 19, wie in Fig. 7 gezeigt ist, in jedem Bereich hinter dem in Laufrichtung jeweils vorlaufenden Abschnitt der Auflagefläche 15. Die Zahnspitze 14 liegt in der in Fig. 6 gezeigten Seitenansicht über der Auflagefläche 15, jedoch, wie Fig. 7 zeigt, seitlich versetzt hierzu. Die zweite Schneidkante 13 besitzt zur Auflagefläche 15 einen in Blickrichtung senkrecht zur Lagerstellenebene 19 und senkrecht zur Schneidkante 13 gemessenen Abstand n. Der Abstand n ergibt sich in einer Seitenansicht in Schärfrichtung 29 als parallel zur Lagerstellenebene 19 gemessener Abstand zwischen der Zahnspitze 14 und der Auflagefläche 15. Der Abstand n ist vergleichsweise klein und beträgt an jeder Stelle der Schneidkante 13 vorteilhaft höchstens ein Drittel, insbesondere höchstens ein Viertel der Höhe h des Schneidzahns 7. Vorteilhaft beträgt der Abstand n in jedem Nachschärfzustand höchstens ein Drittel, insbesondere höchstens ein Viertel der aktuellen Höhe h des Schneidzahns 7. Durch den Freiwinkel γ (Fig. 5) verringert sich mit zunehmendem Nachschärfgrad die Höhe h des Schneidzahns 7, und der Abstand n vergrößert sich. In Fig. 11 sind die Höhe h' und der Abstand n' für den in Fig. 11 gezeigten Nachschärfzustand eingezeichnet. Im nicht nachgeschärften Ausgangszustand beträgt der Abstand n vorteilhaft weniger als 10% der Zahnhöhe h. In vollständig nachgeschärftem Zustand beträgt der Abstand n vorteilhaft 15% bis 30%, insbesondere 20% bis 25% der Zahnhöhe h.

In Fig. 7 ist die Lage der Zahnspitze 14' in der gedachten Verschiebung 44 der Schneidfläche 20 gezeigt. Wie Fig. 7 zeigt, liegt die Zahnspitze 14' der gedachten Verschiebung 44 in der Draufsicht senkrecht zur Lagerstellenebene 19 auf der Längsmittelachse 18 der hinteren Lagerstelle 17.

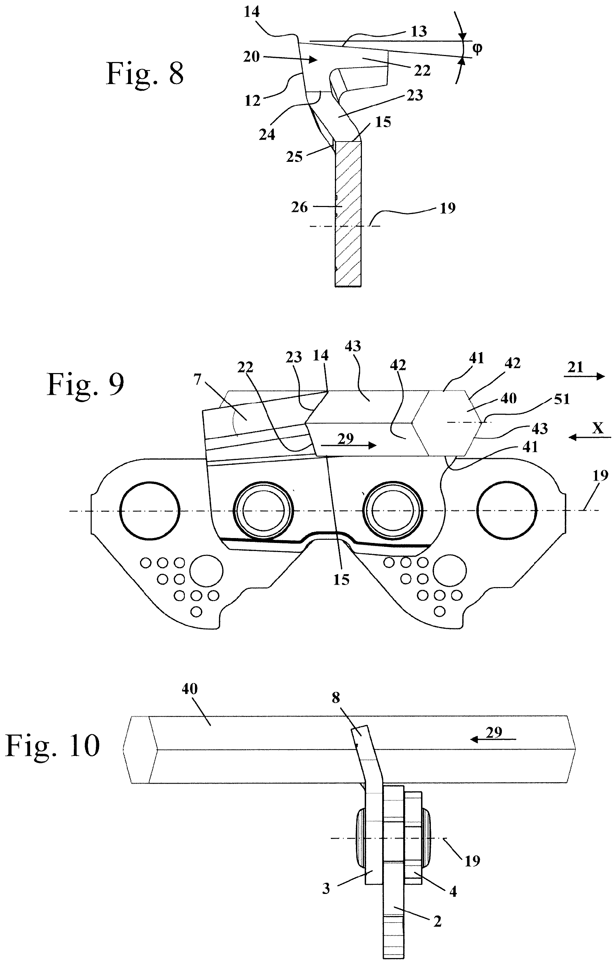

In Fig. 8 ist die Ausrichtung der Schneidflächenkante 24 und der Auflagefläche 15 in Blickrichtung in Laufrichtung 21 parallel zur Lagerstellenebene 19 gezeigt. Wie Fig. 8 außerdem zeigt, verläuft die Schneidkante 13 zur Lagerstellenebene 19 in Blickrichtung in Laufrichtung 21 unter einem Winkel ϕ. Der Winkel ϕ beträgt vorteilhaft mehr als 2°, insbesondere mehr als 5°. Der Winkel ϕ beträgt vorteilhaft weniger als 20°. Der Abstand der Schneidkante 13 zur Lagerstellenebene 19 verringert sich dabei mit steigendem Abstand von der Zahnspitze 14.

In den Fig. 9 und 10 ist eine Feile 40 zum Nachschärfen des Schneidglieds 3 schematisch an der Sägekette 1 dargestellt. Die Feile 40 besitzt einen Querschnitt in Form eines regelmäßigen Sechsecks. In den gezeigten Seitenansichten verläuft die Schärfrichtung 29 parallel zur Lagerstellenebene 19. Gegenüber der Blattebene ist die Schärfrichtung 29 jedoch geneigt (s. Fig. 7). Wie Fig. 9 zeigt, besitzt die Feile 40 eine Längsmittelachse 51, die in Schärfrichtung 29 ausgerichtet ist. Die Feile 40 besitzt zwei einander gegenüberliegende, unbehauene Führungsflächen 41, zwei einander gegenüberliegende, in Umfangsrichtung jeweils an eine Führungsfläche 41 angrenzende erste Feilenflächen 42 und zwei einander gegenüberliegende, an die ersten Feilenflächen in Umfangsrichtung angrenzende zweite Feilenflächen 43. An die zweiten Feilenflächen 43 grenzt an der der ersten Feilenfläche 42 entfernt liegenden Seite jeweils eine Führungsfläche 41 an. Die Führungsflächen 41 sind zur Auflage auf der Auflagefläche 15 vorgesehen. Die ersten Feilenflächen 42 sind zum Feilen des ersten Schneidflächenabschnitts 22 und die zweiten Feilenflächen 43 zum Feilen des zweiten Schneidflächenabschnitts 23 vorgesehen. Die Feile 40 kann in zwei zueinander um 180° um die Längsmittelachse 51 gedrehten Lagen auf der Auflagefläche 15 aufgesetzt und zum Feilen eingesetzt werden.

Wie Fig. 9 zeigt, erstreckt sich die Feile 40 in nicht nachgeschärftem Zustand des Schneidzahns 7 in Richtung senkrecht zur Auflagefläche 15 mindestens bis zur Zahnspitze 14. Die Feile 40 erstreckt sich in Höhenrichtung von der Auflagefläche 15 bis mindestens zur Zahnspitze 14. Die Feile 40 erstreckt sich über die gesamte Höhe h (Fig. 6) des Schneidzahns 7. Im Ausführungsbeispiel ist die Auflagefläche 15 parallel zur Lagerstellenebene 19 ausgerichtet. Beim Nachschärfen wird die Feile 40 deshalb in Gegenrichtung zur Laufrichtung 21 und parallel zur Lagerstellenebene 19 nachgeführt. Die Feile 40 wird auf der Auflagefläche 15 entgegen der Laufrichtung 21 nachgeführt. Die Feile 40 wird entlang ihrer Längsmittelachse 51 auf der Auflagefläche 15 hin und her bewegt und dabei entgegen der Laufrichtung 21 gegen die Schneidfläche 20 (Fig. 8) gedrückt und nachgeführt. Dadurch, dass die Feilenfläche 42 unmittelbar an die unbehauene Auflagefläche 41 angrenzt, wird der Schneidflächenabschnitt 22 bis an die Auflagefläche 15 nachgeschärft, und die Feile 40 kann entlang der Auflagefläche 15 nachgeführt werden. Durch das Nachführen der Feile 40 entlang der Auflagefläche 15 verlängert sich die Auflagefläche 15 beim Nachschärfen der Schneidfläche 20 (Fig. 8). Dadurch, dass die Führungsfläche 41 nicht behauen ist, wird die Auflagefläche 15 nicht nachgeschärft, so dass die Lage und Ausrichtung der Auflagefläche 15 erhalten bleiben. Dadurch ist ein einfaches Nachschärfen selbst für einen ungeübten Benutzer möglich. Der Benutzer muss lediglich die Anlage der Feile 40 an der Auflagefläche 15 und der Schneidfläche 20 sicherstellen. Der Benutzer setzt die Feile 40 auf die Auflagefläche 15 auf und bewegt die Feile 40 auf der Auflagefläche 15 in Schärfrichtung 29. Ein Abheben der Feile 40 von der Auflagefläche 15 oder ein Kippen der Feile 40 gegenüber der Auflagefläche 15 ist während des Nachschärfens nicht vorgesehen.

Die Fig. 11 bis 13 zeigen die Sägekette 1 in einem ersten Nachschärfzustand, in dem die Auflagefläche eine Länge d' besitzt, die größer als die Länge d ist. Aufgrund der Neigung der Oberkante 28 des Dachabschnitts 11 hat sich durch das Nachschärfen der Abstand der Zahnspitze 14 zur Lagerstellenebene 19 verringert. Der Abstand der Schneidflächenkante 24 zur Lagerstellenebene 19 ist unverändert, so dass die Höhe des zweiten Schneidflächenabschnitts 23 beim Nachschärfen abgenommen hat. Der erste Schneidflächenabschnitt 22 ist in Länge und Ausrichtung unverändert. Lediglich die Lage bezogen auf die Lagerstellen 16 und 17 hat sich geändert.

Wie Fig. 12 zeigt, besitzt die Unterseite 27 des Dachabschnitts 11 zur Auflageebene 15 einen senkrecht zur Lagerstellenebene 19 gemessenen kleinsten Abstand a. Im gezeigten Nachschärfzustand besitzt die Unterseite 27 an der Schneidfläche 20 einen Abstand v zur Auflageebene, der größer als der Abstand b ist.

Wie Fig. 13 zeigt, liegt die Schneidflächenkante 24 im gezeigten Nachschärfzustand unterhalb der Unterseite 27 des Dachabschnitts 11, also in geringerem Abstand zur Lagerstellenebene 19 als die Unterseite 27. Die Schneidflächenkante 24 und die Unterseite 27 sind dabei seitlich versetzt zueinander angeordnet. Die Schneidflächenkante 24 befindet sich in dem gezeigten Nachschärfzustand vollständig im Seitenabschnitt 11 des Schneidglieds 3. Der Abstand der Zahnspitze 14 zur Schneidflächenkante 24 hat sich auf den Abstand c' verringert, der kleiner als der Abstand c in nicht nachgeschärftem Zustand (Fig. 2) ist.

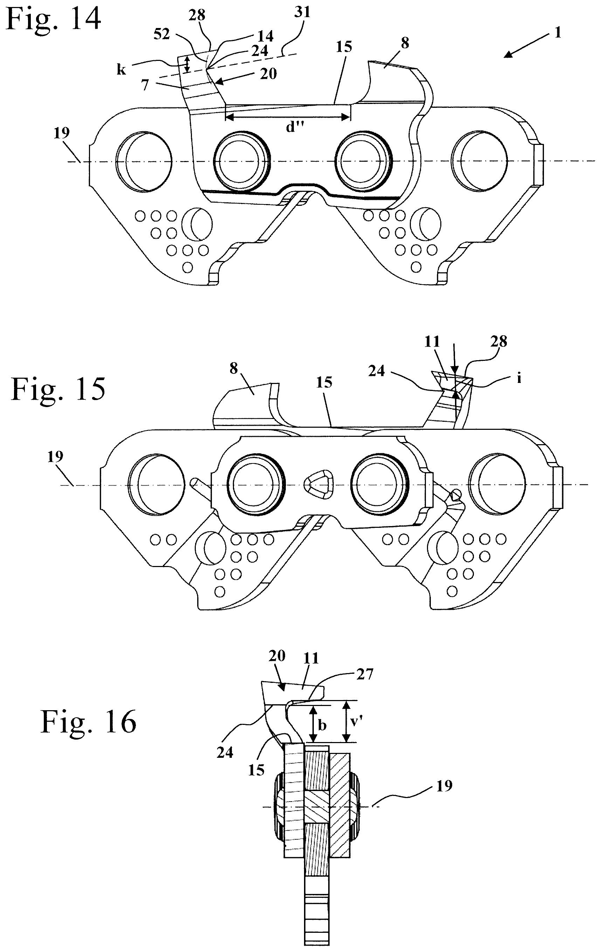

Die Fig. 14 bis 16 zeigen die Sägekette 1 in vollständig nachgeschärftem Zustand des Schneidzahns 7. Der vollständig nachgeschärfte Zustand ist dabei vorteilhaft der Zustand, in dem der verbleibende Rest des Schneidzahns 7 gerade noch ausreichend dimensioniert ist, um die auftretenden Schneidkräfte aufzunehmen. Die Schneidfläche 20 ragt bis an die Markierung 52. In Fig. 14 sind auch die gedachte Linie 31 und der Abstand k eingezeichnet. Wie Fig. 14 und 15 zeigen, ist der Abstand k so gewählt, dass auch in vollständig nachgeschärftem Zustand der Abstand k größer als die Dicke i des Dachabschnitts 11 ist. Der Betrag des Abstands k entspricht dem senkrecht zur Lagerstellenebene 19 gemessenen Abstand zwischen der Schneidflächenkante 24 und der Oberkante 28 des Dachabschnitts 11 in vollständig nachgeschärftem Zustand. Die Auflagefläche 15 besitzt eine Länge d", die größer als die Länge d' und die Länge d ist. Wie Fig. 16 zeigt, ist der Abstand b der Schneidflächenkante 24 zur Auflagefläche 15 auch in diesem Nachschärfzustand kleiner als der Abstand v' der Unterseite 27 des Dachabschnitts 11 an der Schneidfläche 20 zur Auflagefläche 19. Die Schneidflächenkante 24 liegt demnach unterhalb des Dachabschnitts 11. Der Abstand hat sich gegenüber dem Nachschärfzustand aus den Fig. 11 bis 13 vom Abstand v auf den Abstand v' verringert. In vollständig nachgeschärftem Zustand kann es zweckmäßig sein, dass der Abstand v' dem Abstand b entspricht, so dass die Schneidflächenkante 24 auf der Höhe der Unterseite 27 des Dachabschnitts 11 liegt. Die Schneidflächenkante 24 liegt in bevorzugter Ausführung in allen zulässigen Nachschärfzuständen mit Abstand zum Dachabschnitt 11.

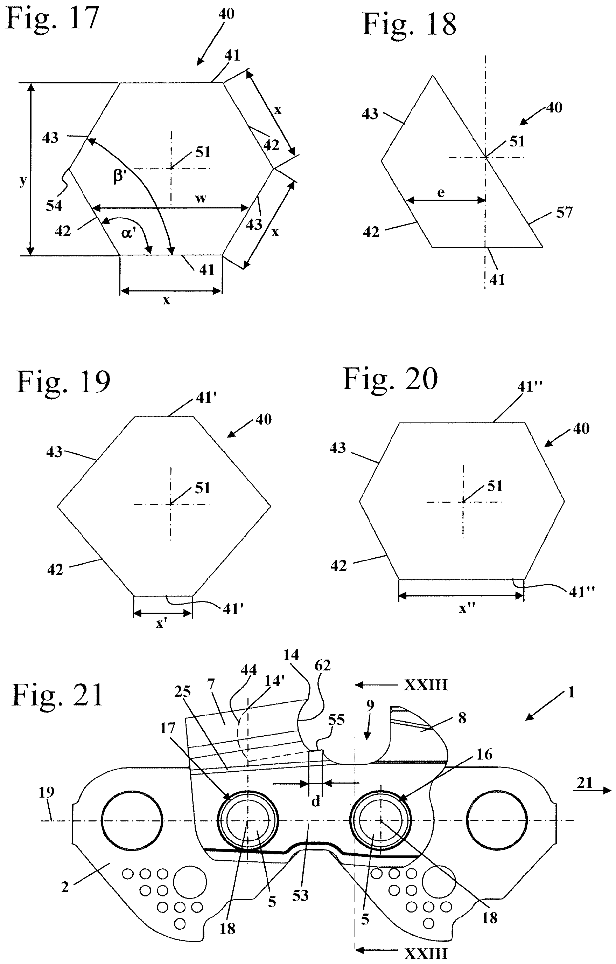

Die Fig. 17 bis 20 zeigen Ausführungsbeispiele für eine Feile 40 zum Feilen des in den Fig. 1 bis 16 gezeigten Schneidzahns 7. Fig. 17 zeigt eine Feile 40, deren Querschnitt als regelmäßiges Sechseck ausgebildet ist. Die Führungsfläche 41 besitzt ein Kantenmaß x. Im Ausführungsbeispiel ist das Kantenmaß x die Länge der Führungsfläche 41 in einem Querschnitt senkrecht zur Längsmittelachse 51. Die Länge der Führungsfläche 41 kann von der Länge der Auflagefläche 15 verschieden sein. Vorteilhaft weist die Auflagefläche 15 im Ausgangszustand eine Länge von mindestens einem Drittel der Länge der Führungsfläche 41 auf. Die Feilenflächen 42 und 43 besitzen das gleiche Kantenmaß x. Die Führungsfläche 41 schließt mit der in Umfangsrichtung angrenzenden Feilenfläche 42 einen Winkel a' ein, der im Ausführungsbeispiel 60° beträgt. Der Winkel a' ist auf den Winkel α des Schneidglieds 3 abgestimmt und genau so groß wie dieser. Die Führungsfläche 41 schließt mit der in Umfangsrichtung an die Feilenfläche 42 anschließenden zweiten Feilenfläche 43 einen Umfangswinkel β' ein, der im Ausführungsbeispiel 60° beträgt. Der Winkel β' ist auf den Winkel β des Schneidglieds 2 abgestimmt und genau so groß wie dieser. Der Abstand y zwischen den gegenüberliegenden Führungsflächen 41 ist doppelt so groß wie der Abstand b der Schneidflächenkante 24 des Schneidglieds 3 zur Auflage 15. Die Längskante 54 zwischen den Feilenflächen 42 und 43 liegt in der Schneidflächenkante 24, wenn die Feile 40 zum Nachschärfen der Schneidfläche 20 genutzt wird.

Bei dem in Fig. 17 gezeigten Ausführungsbeispiel sind jeweils zwei Führungsflächen 41 und jeweils zwei Feilenflächen 42 bzw. 43 vorgesehen, so dass die Feile 40 in zwei um 180° um die Längsmittelachse 51 gedrehten Lagen zum Feilen des Schneidzahns 7 eingesetzt werden kann. Die Feile 40 besitzt eine parallel zur Führungsfläche 41 gemessene Breite w. In einem ersten, an die Führungsfläche 41 anschließenden Bereich, der sich bis auf die Höhe der Längskante 54 und der Längsmittelachse 51 erstreckt, vergrößert sich die Breite w mit steigendem Abstand von der Führungsfläche 41. In einem zweiten Bereich, der sich von der durch die Längsmittelachse 51 und den Längskanten 54 definierten Ebene auf die der unteren Führungsfläche 41 abgewandte Seite erstreckt, verringert sich die Breite w mit steigendem Abstand von der unteren Führungsfläche 41. Die Längskante 54 ist der Bereich mit der größten Breite w.

Fig. 18 zeigt ein Ausführungsbeispiel einer Feile 40, die nur eine Führungsfläche 41, eine erste Feilenfläche 42 und eine zweite Feilenfläche 43 besitzt, die in Umfangsrichtung angrenzend aneinander angeordnet sind. Die Abmessungen und Ausrichtungen der Auflagefläche 41 und der beiden Feilenflächen 42 und 43 entsprechen vorteilhaft denen des Ausführungsbeispiels nach Fig. 17. Der Querschnitt der Feile 40 aus Fig. 18 besitzt die Form eines halben Sechsecks. Die der Feilenfläche 42 gegenüberliegende Längsseite 57 ist im Ausführungsbeispiel eben ausgebildet. Die Längsseite 57 ist ohne Funktion und kann deshalb jede beliebige Form annehmen. Die Feile 40 besitzt eine Mittelebene 30, die die Längsmittelachse 51 enthält und senkrecht zur Führungsfläche 41 ausgerichtet ist. Im Bereich der ersten Feilenfläche 42 vergrößert sich der parallel zur Führungsfläche 41 gemessene Abstand der Feilenfläche 42 zur Mittelebene. Im Bereich der zweiten Feilenfläche 43 verringert sich der Abstand e der Feilenfläche 43 zur Mittelebene 30 mit steigendem Abstand zur Führungsfläche 41. Dadurch wird eine Geometrie der Schneidfläche 20 mit einem Hinterschnitt erzielt.

Fig. 19 zeigt ein Ausführungsbeispiel einer Feile 40, bei dem Führungsflächen 41 vorgesehen sind, die ein verringertes Kantenmaß x' besitzen. Das Kantenmaß x' beträgt vorteilhaft mindestens 3 mm. Auch das Kantenmaß x und das Kantenmaß x" für das Ausführungsbeispiel aus Fig. 20 betragen vorteilhaft mindestens 3 mm, um eine ausreichende Auflage der Feile 40 an der Auflagefläche 15 zu erreichen. Beim Ausführungsbeispiel nach Fig. 20 sind Führungsflächen 41" vorgesehen, die gegenüber den Führungsflächen 41 aus Fig. 17 ein vergrößertes Kantenmaß x" besitzen. Bis auf das Kantenmaß x' bzw. x" entsprechen die Feilen 40 aus den Fig. 19 und 20 dem Ausführungsbeispiel nach Fig. 17. Funktionsrelevant sind insbesondere die Länge der zweiten Feilenfläche 42 und die Ausrichtung der zweiten Feilenfläche 42 gegenüber der Führungsfläche 41'. Die Form, Länge und Ausrichtung der ersten Feilenfläche 42 gegenüber der Führungsfläche 41' können auch anders als dargestellt gewählt sein. Die Feile 40 kann insbesondere auch asymmetrisch gestaltet sein. Das Verhältnis der Summe der Längen der unbehauenen Führungsflächen 41 zur Summe der Längen der Feilenflächen 42, 43 ist vorteilhaft größer als ein Viertel, insbesondere größer als ein Drittel, vorzugsweise größer als die Hälfte.

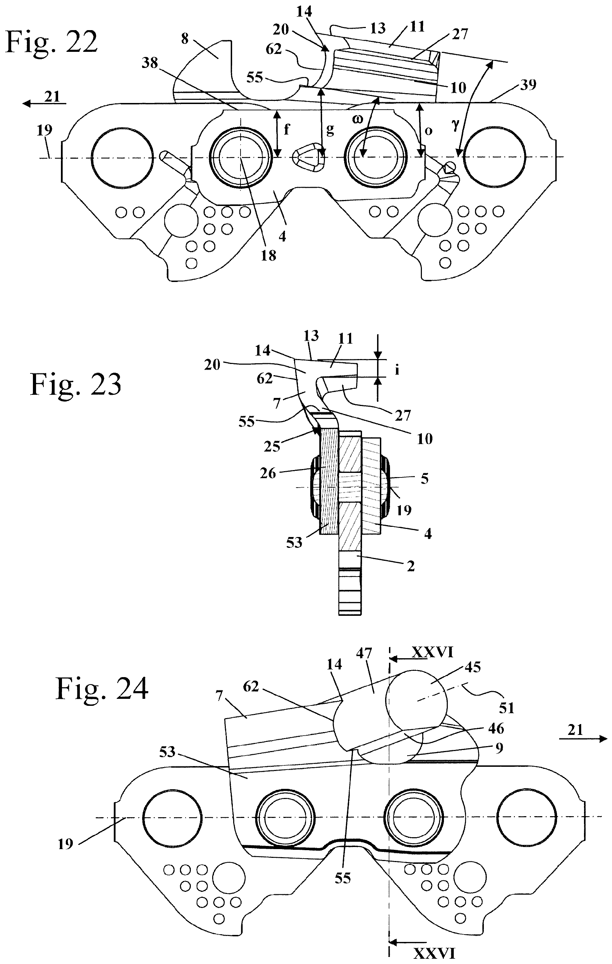

Die Fig. 21 bis 31 zeigen eine nicht erfindungsgemäße Ausführung einer Sägekette 1 mit einem Schneidglied 53. Gleiche Bezugszeichen bezeichnen in allen Figuren einander entsprechende Elemente. Die Sägekette 1 aus Fig. 21 ist entsprechend zu der Sägekette 1 aus den vorangegangenen Figuren aufgebaut. Die Sägekette 1 unterscheidet sich vom vorangegangenen Ausführungsbeispiel in der Gestaltung des Schneidzahns 7 des Schneidglieds 53. Der Schneidzahn 7 besitzt eine erste Schneidkante 62, die, wie Fig. 21 zeigt, im Unterschied zur ersten Schneidkante 12 gebogen verläuft. Die erste Schneidkante 62 ist seitlich angeordnet. Vorlaufend zur ersten Schneidkante 62 ist eine Auflagefläche 55 ausgebildet. Die Auflagefläche 55 bildet in diesem Ausführungsbeispiel einen Teil des Bodens der Aussparung 9. Die Auflagefläche 55 erstreckt sich jedoch nur über einen Abschnitt des Bodens der Aussparung 9. Die in Laufrichtung 21 gemessene Länge d der Auflagefläche 55 beträgt mindestens 3 mm. Beim Nachschärfvorgang verschiebt sich die erste Schneidkante 62 gemeinsam mit der in Fig. 22 gezeigten Schneidfläche 20 entgegen der Laufrichtung 21 und parallel zur Auflagefläche 55. In Fig. 21 ist eine gedachte Verschiebung 44 der Schneidfläche 20 gezeigt, bei der die Zahnspitze 14' der gedachten Verschiebung 44 senkrecht zur Lagerstellenebene 19 über der Längsmittelachse 18 der hinteren Lagerstelle 17 liegt. Die Verschiebung erfolgt dabei in Verlängerung der Auflagefläche 55, also entlang einer Ebene, in der die Auflagefläche 55 liegt.

Wie Fig. 22 zeigt, ist die Auflagefläche 55 in Blickrichtung der Längsmittelachsen 18 der Lagerstellen 16 und 17 zur Lagerstellenebene 19 um einen Winkel ω geneigt. Im Ausführungsbeispiel entspricht der Winkel ω dem Winkel γ, um den die Oberkante 28 gegenüber der Lagerstellenebene 19 geneigt ist. Die Auflagefläche 55 verläuft demnach parallel zur Oberkante 28 des Dachabschnitts 11 des Schneidglieds 53. Der Winkel ω, um den die Auflagefläche 55 gegenüber der Lagerstellenebene 19 geneigt ist, beträgt vorteilhaft 2° bis 20°, insbesondere 5° bis 15°. Wie Fig. 22 auch zeigt, besitzt die Auflagefläche 55 zur Lagerstellenebene 19 einen senkrecht zur Lagerstellenebene 19 gemessenen Abstand g. Der Abstand g ist dabei der geringste Abstand der Auflagefläche 55 zur Lagerstellenebene 19 und im Ausführungsbeispiel aufgrund der Neigung der Auflagefläche 55 unmittelbar benachbart zur Schneidfläche 20 gemessen. Der Abstand g ist deutlich größer als der Abstand f der Oberseite 28 des benachbarten Verbindungsglieds 4 zur Lagerstellenebene 19. Die Differenz der Abstände g und f ist vorteilhaft so gewählt, dass der Abstand g auch im maximal nachgeschärften Zustand der Schneidfläche 20 noch größer als der Abstand f ist. Der Abstand g ist in vollständig nachgeschärftem Zustand vorteilhaft auch größer als der Abstand o der Oberseite 39 des Treibglieds 2 zur Lagerstellenebene 19.

Wie Fig. 22 auch zeigt, verläuft die Schneidfläche 20 gebogen, während die Auflagefläche 55 eben ausgebildet ist. Die Schneidfläche 20 ist als eine durchgehende, gekrümmte Fläche ausgebildet, an der sowohl die erste Schneidkante 62 als auch die zweite Schneidkante 13 ausgebildet sind. Die Schneidfläche 20 erstreckt sich auch in den Dachabschnitt 11. Wie Fig. 23 zeigt, besitzt der Dachabschnitt 11 eine maximale Dicke i sowie eine Unterseite 27. Der Schneidzahn 7 ist an einem Zahnfuß 25 mit dem ebenen Grundkörper 26 des Schneidglieds 53 verbunden, insbesondere an diesen angeformt.

Die Fig. 24 bis 26 zeigen eine Feile 45 zum Nachschärfen des Schneidglieds 53 am Schneidglied 53. Beim Nachschärfen wird die Feile 45 mit ihrer Längsmittelachse 51 in einer Nachschärfrichtung 29 ausgerichtet. Wie die Fig. 24 bis 26 zeigen, ist die Nachschärfrichtung 29 zur Lagerstellenebene 19 und zur Laufrichtung 21 geneigt.

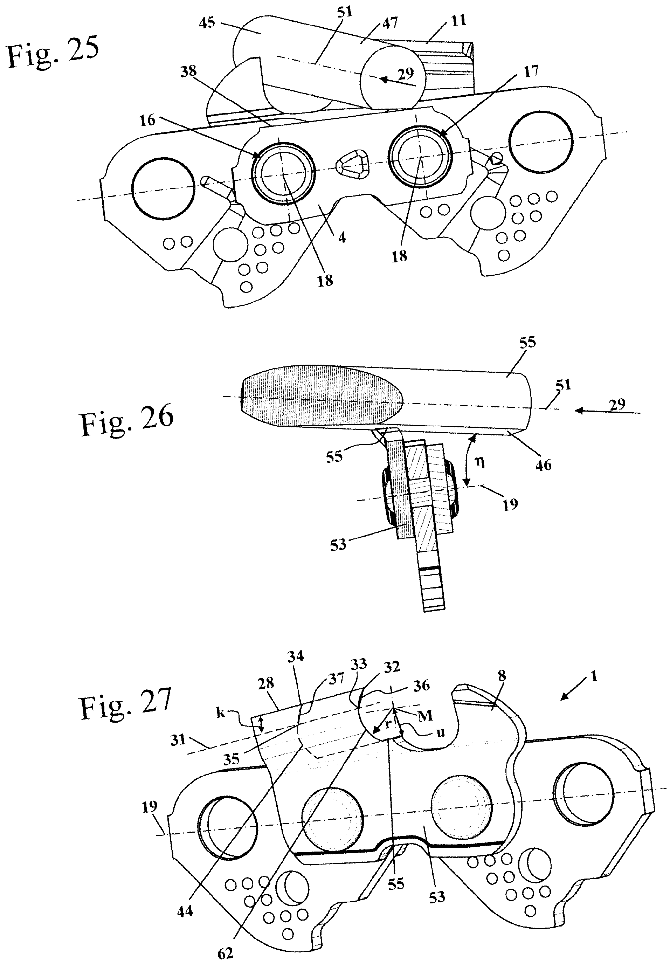

Die Feile 45 ist als Rundfeile mit einer abgeflachten Seite ausgebildet. An der Abflachung ist eine Führungsfläche 46 ausgebildet, an der die Feile 45 nicht behauen ist. An die ebene Führungsfläche 46 schließt eine gekrümmte Feilenfläche 47 an, die im Ausführungsbeispiel einen kreisbogenförmigen Querschnitt besitzt und die beiden Längsseiten der Führungsfläche 46 miteinander verbindet. An der Feilenfläche 47 besitzt die Feile 45 Zähne zur Bearbeitung, die an der Schneidfläche 20 eingreifen. Mit der Führungsfläche 46 liegt die Feile 45 auf der Auflagefläche 55 auf. Wie Fig. 26 zeigt, schließt die Führungsfläche 46 in einer Blickrichtung entgegen der Laufrichtung 21 mit der Lagerstellenebene 19 einen Winkel η ein, der vorteilhaft 2° bis 10°, insbesondere 3° bis 8° beträgt. Im Ausführungsbeispiel ist ein Winkel η von etwa 5° vorgesehen. Die Neigung der Führungsfläche 46 entspricht der Neigung der Auflagefläche 55 in der in Fig. 26 gezeigten Querrichtung des Schneidglieds 53. Die Auflagefläche 55 verläuft demnach weder in einer Blickrichtung in Laufrichtung 21 noch in einer Blickrichtung in Richtung der Längsmittelachse 18 der Lagerstellen 16 und 17 parallel zur Lagerstellenebene 19. Durch die vorgegebene räumliche Orientierung der Auflagefläche 55 wird dem Benutzer eine korrekte Ausrichtung der Feile 45 zum Schneidzahn 7 in zumindest einer Raumrichtung ermöglicht. Darüber hinaus wird dem Benutzer der Abstand, in dem die Feile 45 über die Lagerstellenebene 45 zu bewegen ist, vorgegeben, so dass ein gleichbleibender Schneidwinkel gewährleistet und eine Schwächung des Grundkörpers 26 des Schneidglieds 53 vermieden ist.

Fig. 27 zeigt die Sägekette 1 in perspektivischer Darstellung mit Blickrichtung in Nachschärfrichtung 29. In dieser Blickrichtung fällt die Schneidkante 62 mit der Schneidfläche 20 zusammen. In Fig. 27 ist auch die gedachte Verschiebung 44 der Schneidfläche 20 bzw. der Schneidkante 62 eingezeichnet. In dieser Blickrichtung verläuft die Schneidkante 62 als Kreisbogen in einem Radius r um einen Mittelpunkt M. Die Auflagefläche 55 besitzt einen senkrecht zur Auflagefläche 55 gemessenen Abstand u zum Mittelpunkt M. Der Abstand u ist vorteilhaft kleiner als der Radius r. Die Auflagefläche 55 ist dabei näher an der Lagerstellenebene 55 angeordnet als der Mittelpunkt M. Die Schneidkante 62 besitzt einen ersten Schnittpunkt 32, der der Schnittpunkt der Schneidkante 62 mit der Oberkante 28 des Dachabschnitts 11 ist. Ein zweiter Schnittpunkt 33 ist der Schnittpunkt einer gedachten Linie 31 mit der Schneidkante 62. Die gedachte Linie 31 besitzt zur Oberkante 28 einen Abstand k, der größer als die maximale Dicke i des Dachabschnitts 11 ist. Die Schnittpunkte 32 und 33 sind von einer gedachten Verbindungslinie 36 verbunden. Entsprechend ist ein dritter Schnittpunkt 34 an der gedachten Verschiebung 44 der Schnittpunkt der gedachten Verschiebung 44 mit der Oberkante 28 und ein vierter Schnittpunkt 35 der Schnittpunkt der gedachten Verschiebung 44 mit der gedachten Linie 31. Der dritte Schnittpunkt 34 und der vierte Schnittpunkt 35 sind mit einer Verbindungslinie 37 verbunden. Die Verbindungslinien 36 und 37 verlaufen parallel zueinander. Die Parallelität der Verbindungslinien 36 und 37 ergibt sich dadurch, dass die Auflagefläche 55 parallel zur Oberkante 28 verläuft. Der Bereich zwischen den Schnittpunkten 32 und 33 wird vom gleichen Umfangsabschnitt der Feile 45 gefeilt wie der Bereich zwischen den Schnittpunkten 34 und 35 in dem entsprechenden Nachschärfzustand. Dadurch ergibt sich die gleiche Neigung der Verbindungslinien 36 und 37. Im Bereich zwischen den Schnittpunkten 32 und 33 besitzt die Schneidfläche 20 Normalen, die mit der Auflagefläche 55 und der Lagerstellenebene 19 von 0° und von 90° verschiedene Winkel einschließen. In dem Bereich der Schneidfläche 20, der näher an der Lagerstellenebene 19 liegt als der Mittelpunkt M, besitzt die Schneidfläche 20 weitere Normalen, die mit der Auflagefläche 55 und der Lagerstellenebene 19 von 0° und von 90° verschiedene Winkel einschließen. Zwischen den beiden Bereichen ist eine Normale an die Schneidfläche 20 gegeben, die parallel zur Lagerstellenebene 19 verläuft.

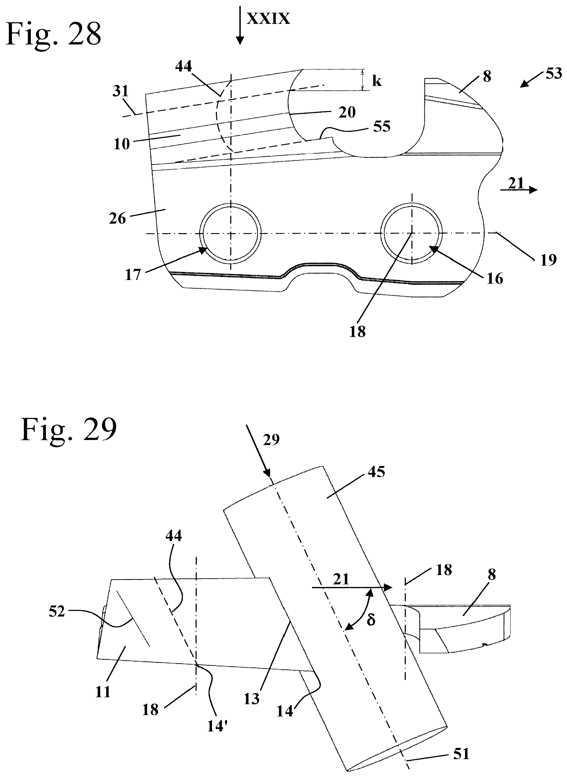

Fig. 28 zeigt das Schneidglied 53 in einer Seitenansicht mit Blickrichtung in Richtung der Längsmittelachsen 18 der Lagerstellen 16 und 17. Die Längsmittelachse 18 ist bei einer Sägekette 1, deren Kettenglieder über Verbindungsbolzen 5 miteinander verbunden sind, die Längsmittelachse der Verbindungsbolzen 5.

Fig. 29 zeigt die Ausrichtung der Schärfrichtung 29. Die Schärfrichtung 29 schließt mit der Laufrichtung 21 einen Winkel δ ein. Fig. 29 zeigt auch die Anordnung der gedachten Verschiebung 44, bei der die Zahnspitze 14' der gedachten Verschiebung 44 senkrecht zur Lagerstellenebene 19 oberhalb der Längsmittelachse 18 der hinteren Lagerstelle 17 angeordnet ist. Wie Fig. 29 auch zeigt, besitzt die Markierung 52 zur gedachten Verschiebung 44 einen Abstand. Der Schneidzahn 7 kann demnach noch weiter nachgeschärft werden, wenn sich die Schneidfläche 20 an der gedachten Verschiebung 44 befindet.

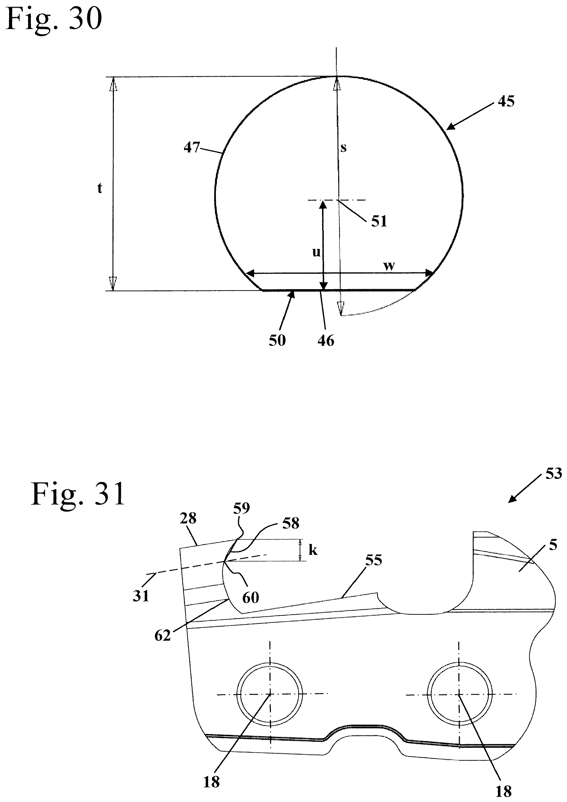

Fig. 30 zeigt die Feile 45 in schematischem Querschnitt. Die Feile 45 besitzt an der Feilenfläche 47 einen Durchmesser s, der dem doppelten Radius r der Schneidkante 62 (Fig. 27) entspricht. Die Feile 45 besitzt eine Abflachung 50, an der die Führungsfläche 46, die nicht behauen ist, ausgebildet ist. An der Abflachung 50 besitzt die Feile 45 eine verringerte Höhe t, die kleiner als der Durchmesser s ist. Der Abstand der Längsmittelachse 51 zur Abflachung 50 entspricht dem Abstand u der Auflagefläche 55 zum Mittelpunkt M, der in Fig. 30 ebenfalls schematisch eingezeichnet ist. Der Mittelpunkt M entspricht dem Mittelpunkt des Kreises, auf dem die Feilenfläche 47 liegt. Die Führungsfläche 46 erstreckt sich vorteilhaft über mindestens ein Sechstel des Umfangs der Feile 45. Die Feile 45 besitzt eine parallel zur Führungsfläche 46 gemessene Breite w, die sich mit steigendem Abstand zur Führungsfläche 46 vergrößert. Dadurch wird ein Hinterschnitt an der Schneidfläche 20 erzeugt. Die Feilenfläche 47 erstreckt sich im Ausführungsbeispiel über einen Umfangswinkel von mehr als 270° um den Mittelpunkt M und schließt direkt an beide Längsseiten der Führungsfläche 46 an. Zweckmäßig kann eine Feile 45 auch nur durch ein Segment der in Fig. 30 dargestellten Feile 45 gebildet sein, so dass die kreisbogenförmige Feilenfläche 47 zumindest an einer Längsseite nicht direkt in die ebene Führungsfläche 46 übergeht.

Fig. 31 zeigt das Schneidglied 53 in vollständig nachgeschärftem Zustand. Auch in vollständig nachgeschärftem Zustand liegt eine in Fig. 31 schematisch eingezeichnete Verbindungslinie 58, die einen fünften Schnittpunkt 59 der Schneidkante 62 mit der Oberkante 28 des Dachabschnitts 11 mit einem sechsten Schnittpunkt der Schneidkante 62 mit der gedachten Linie 31 verbindet, parallel zu den Verbindungslinien 36 und 37 (Fig. 27). Die Verbindungslinie 58 ist dabei tatsächlich in einer Blickrichtung in Schärfrichtung 29 einzuzeichnen und in Fig. 31 nur schematisch dargestellt.

In alternativer Ausführung kann die Auflagefläche 15, 55 nur durch einen Teil des die Aussparung 9 begrenzenden Bodens gebildet sein. In weiterer alternativer Ausgestaltung kann die Auflagefläche 15 bei Blickrichtung in Laufrichtung 21 um einen Winkel η (Fig. 26) zur Lagerstellenebene 19 geneigt sein.

## Patentansprüche

1. Schneidglied einer Sägekette, wobei das Schneidglied (3, 53) einen Schneidzahn (7) besitzt, wobei das Schneidglied (3, 53) eine in Laufrichtung (21) des Schneidglieds (3, 53) vorne liegende vordere Lagerstelle (16) und eine in Laufrichtung hinten liegende hintere Lagerstelle (17) besitzt, wobei das Schneidglied (3, 53) eine geschärfte Schneidfläche (20) besitzt, an der mindestens eine Schneidkante (12, 13, 62) ausgebildet ist, wobei das Schneidglied (3, 53) eine ebene, an die Schneidfläche (20) angrenzende Auflagefläche (15, 55) besitzt, wobei der Schneidzahn (7) einen Dachabschnitt (11) besitzt, an dem eine Schneidkante (13) ausgebildet ist, wobei die geschärfte Schneidfläche (20) einen ersten Schneidflächenabschnitt (22) und einen winklig hierzu verlaufenden zweiten Schneidflächenabschnitt (23) besitzt, wobei der zweite Schneidflächenabschnitt (23) mindestens teilweise am Dachabschnitt (11) ausgebildet ist, und wobei der erste Schneidflächenabschnitt (22) und der zweite Schneidflächenabschnitt (23) an einer Schneidflächenkante (24) aneinander angrenzen, wobei in einer Seitenansicht des Schneidglieds (3, 53) mit Blickrichtung in einer Schärfrichtung (29), die parallel zur Schneidfläche (20) und parallel zur Auflagefläche (15, 55) verläuft, der Dachabschnitt (11) eine senkrecht zu einer Laufrichtung (21) gemessene größte Dicke (i) besitzt, mit einer ersten Verbindungslinie (36) in dieser Seitenansicht, die einen Schnittpunkt (32) einer Oberkante (28) des Dachabschnitts (11) mit der Schneidfläche (20) mit einem Schnittpunkt (33) einer gedachten Linie (31), die zu der Oberkante (28) des Dachabschnitts (11) parallel und in einem Abstand (k), der mindestens der größten Dicke (i) entspricht, verläuft, mit der Schneidfläche (20) verbindet, und mit einer zweiten Verbindungslinie (37) in dieser Seitenansicht, die einen Schnittpunkt (34) der Oberkante (28) des Dachabschnitts (11) mit einer gedachten Verschiebung (44) der Schneidfläche (20) parallel zur Auflagefläche (15, 55) an eine Position, in der eine Zahnspitze (14') des Schneidzahns (7) senkrecht zur Laufrichtung (21) über einer Längsmittelachse (18) der hinteren Lagerstelle (17) liegt, mit einem Schnittpunkt (35) der gedachten Linie (31) mit der gedachten Verschiebung (44) der Schneidfläche (20) verbindet,
**dadurch gekennzeichnet, dass** die Auflagefläche (15, 55) derart ausgerichtet ist, dass die erste Verbindungslinie (36) und die zweite Verbindungslinie (37) parallel zueinander verlaufen.

2. Schneidglied nach Anspruch 1,
**dadurch gekennzeichnet, dass** der Abstand (k) der gedachten Linie (31) zur Oberkante (28) des Dachabschnitts (11) um mindestens 0,8 mm größer als die größte Dicke (i) des Dachabschnitts (11) ist.

3. Schneidglied nach Anspruch 1 oder 2,
**dadurch gekennzeichnet, dass** die in Laufrichtung (21) gemessene Länge (d) der Auflagefläche (15, 55) mindestens 3 mm beträgt.

4. Schneidglied nach Anspruch 3,
**dadurch gekennzeichnet, dass** die Auflagefläche (15) mit der Lagerstellenebene (19) in der genannten Seitenansicht einen Winkel von weniger als 5° einschließt.

5. Schneidglied nach einem der Ansprüche 1 bis 4,
**dadurch gekennzeichnet, dass** die Längsmittelachsen (18) der Lagerstellen (16, 17) in einer Lagerstellenebene (19) liegen.

6. Schneidglied nach Anspruch 5,
**dadurch gekennzeichnet, dass** die erste Verbindungslinie (36) mit der Lagerstellenebene (19) einen an der dem Dachabschnitt (11) abgewandten Seite gemessenen Schneidwinkel (ε) von weniger als 90° einschließt.

7. Schneidglied nach Anspruch 5 oder 6,
**dadurch gekennzeichnet, dass** die Auflagefläche (15, 55) mit der Lagerstellenebene (19) in einer Blickrichtung in Laufrichtung (21) einen Winkel von weniger als 5°einschließt.

8. Schneidglied nach einem der Ansprüche 5 bis 7,
**dadurch gekennzeichnet, dass** vorlaufend zu dem Schneidzahn (7) ein Tiefenbegrenzer (8) angeordnet ist und dass zwischen dem Schneidzahn (7) und dem Tiefenbegrenzer (8) eine Aussparung (9) gebildet ist, wobei die Aussparung (9) in Richtung auf die Lagerstellenebene (19) mindestens teilweise von der Auflagefläche (15, 55) begrenzt ist.

9. Sägekette mit einem Schneidglied nach einem der Ansprüche 6 bis 8 und mit einem Verbindungsglied (4), das bezogen auf die Laufrichtung (21) neben dem Schneidglied (3, 53) angeordnet ist, wobei das Verbindungsglied (4) eine Oberseite (38) besitzt, wobei der Abstand (f) der Oberseite (38) des Verbindungsglieds (4) zur Lagerstellenebene (19) kleiner als der Abstand (g) der Auflagefläche (15, 55) zur Lagerstellenebene (19) ist.

10. Feile zum Feilen eines Schneidzahns einer Sägekette, wobei die Feile (40, 45) in einem Querschnitt eine unbehauene Führungsfläche (41, 41', 41", 46) und mindestens eine in Umfangsrichtung an die Führungsfläche (41, 41', 41", 46) angrenzende erste Feilenfläche (42) besitzt, wobei die unbehauene Führungsfläche (41, 41', 41", 46) sich über mindestens 1/6 des Umfangs der Feile (40, 45) in diesem Querschnitt erstreckt,
**dadurch gekennzeichnet, dass** die Feile (40) eine in Umfangsrichtung an die erste Feilenfläche (42) angrenzende zweite Feilenfläche (43) besitzt, wobei die Führungsfläche (41, 41', 41") mit der ersten Feilenfläche (42) einen ersten Winkel (α') einschließt, der mehr als 90° beträgt, und wobei die Führungsfläche (41, 41', 41") mit der zweiten Feilenfläche (43) einen zweiten Winkel (β') einschließt, der weniger als 90° beträgt.

11. Feile nach Anspruch 10,
**dadurch gekennzeichnet, dass** die parallel zur Führungsfläche (41, 41', 41", 46) gemessene Breite (w) der Feile (40, 45) sich in mindestens einem Bereich des Querschnitts der Feile (40, 45) mit steigendem Abstand von der Führungsfläche (41, 41', 41", 46) vergrößert.

## Claims

1. Cutting member of a saw chain, wherein the cutting member (3, 53) has a cutting tooth (7), wherein the cutting member (3, 53) has a front bearing point (16), which is situated at the front in the running direction (21) of the cutting member (3, 53), and a rear bearing point (17), which is situated at the rear in the running direction, wherein the cutting member (3, 53) has a sharpened cutting surface (20) on which at least one cutting edge (12, 13, 62) is formed, wherein the cutting member (3, 53) has a planar support surface (15, 55) adjoining the cutting surface (20), wherein the cutting tooth (7) has a roof portion (11) on which a cutting edge (13) is formed, wherein the sharpened cutting surface (20) has a first cutting surface portion (22) and, extending at an angle thereto, a second cutting surface portion (23), wherein the second cutting surface portion (23) is at least partially formed on the roof portion (11), and wherein the first cutting surface portion (22) and the second cutting surface portion (23) adjoin one another at a cutting surface edge (24), wherein, in a side view of the cutting member (3, 53) looking in a sharpening direction (29) which extends parallel to the cutting surface (20) and parallel to the support surface (15, 55), the roof portion (11) has a largest thickness (i) measured perpendicularly to a running direction (21), with a first connecting line (36) in this side view which connects a point of intersection (32) between an upper edge (28) of the roof portion (11) and the cutting surface (20) to a point of intersection (33) between an imaginary line (31), which extends parallel to the upper edge (28) of the roof portion (11) and at a distance (k) which corresponds at least to the largest thickness (i), and the cutting surface (20), and with a second connecting line (37) in this side view which connects a point of intersection (34) between the upper edge (28) of the roof portion (11) and an imaginary displacement (44) of the cutting surface (20) parallel to the support surface (15, 55), at a position in which a tooth tip (14') of the cutting tooth (7) lies perpendicularly to the running direction (21) above a longitudinal centre axis (18) of the rear bearing point (17), to a point of intersection (35) between the imaginary line (31) and the imaginary displacement (44) of the cutting surface (20),
**characterized in that** the support surface (15, 55) is oriented in such a way that the first connecting line (36) and the second connecting line (37) extend parallel to one another.

2. Cutting member according to Claim 1,
**characterized in that** the distance (k) between the imaginary line (31) and the upper edge (28) of the roof portion (11) is at least 0.8 mm larger than the largest thickness (i) of the roof portion (11).

3. Cutting member according to Claim 1 or 2,
**characterized in that** the length (d) of the support surface (15, 55) as measured in the running direction (21) is at least 3 mm.

4. Cutting member according to Claim 3,
**characterized in that**, in said side view, the support surface (15) encloses, with the bearing point plane (19), an angle of less than 5°.

5. Cutting member according to one of Claims 1 to 4,
**characterized in that** the longitudinal centre axes (18) of the bearing points (16, 17) lie in a bearing point plane (19).

6. Cutting member according to Claim 5,
**characterized in that** the first connecting line (36) encloses, with the bearing point plane (19), a cutting angle (ε) of less than 90° measured on the side facing away from the roof portion (11).

7. Cutting member according to Claim 5 or 6,
**characterized in that**, when looking in the running direction (21), the support surface (15, 55) encloses, with the bearing point plane (19), an angle of less than 5°.

8. Cutting member according to one of Claims 5 to 7,
**characterized in that** a depth limiter (8) is arranged ahead of the cutting tooth (7), and **in that** a cutout (9) is formed between the cutting tooth (7) and the depth limiter (8), wherein the cutout (9) is at least partially delimited by the support surface (15, 55) in the direction of the bearing point plane (19).

9. Saw chain having a cutting member according to one of Claims 6 to 8 and having a connecting member (4) which is arranged next to the cutting member (3, 53) with respect to the running direction (21), wherein the connecting member (4) has an upper side (38), wherein the distance (f) between the upper side (38) of the connecting member (4) and the bearing point plane (19) is less than the distance (g) between the support surface (15, 55) and the bearing point plane (19).

10. File for filing a cutting tooth of a saw chain, wherein, in a cross section, the file (40, 45) has a rough guide surface (41, 41', 41", 46) and at least one first file surface (42) adjoining the guide surface (41, 41', 41", 46) in the circumferential direction, wherein the rough guide surface (41, 41', 41", 46) extends over at least 1/6 of the circumference of the file (40, 45) in this cross section,
**characterized in that** the file (40) has a second file surface (43) adjoining the first file surface (42) in the circumferential direction, wherein the guide surface (41, 41', 41") encloses, with the first file surface (42), a first angle (α') which is more than 90°, and wherein the guide surface (41, 41', 41") encloses, with the second file surface (43), a second angle (β') which is less than 90°.

11. File according to Claim 10,
**characterized in that** the width (w) of the file (40, 45) as measured parallel to the guide surface (41, 41', 41", 46) increases in at least one region of the cross section of the file (40, 45) with increasing distance from the guide surface (41, 41', 41", 46).

## Revendications

1. Élément de coupe d'une chaîne de sciage, l'élément de coupe (3, 53) présentant une dent de coupe (7), l'élément de coupe (3, 53) présentant un point de support (16) avant situé à l'avant dans la direction d'avance (21) de l'élément de coupe (3, 53) et un point de support (17) arrière situé à l'arrière dans la direction d'avance, l'élément de coupe (3, 53) présentant une face de coupe (20) auguisée, sur laquelle au moins une arête de coupe (12, 13, 62) est formée, l'élément de coupe (3, 53) présentant une face d'appui (15, 55) plane adjacente à la face de coupe (20), la dent de coupe (7) présentant une partie formant toit (11) sur laquelle une arête de coupe (13) est formée, la face de coupe (20) auguisée présentant une première partie de face de coupe (22) et une deuxième partie de face de coupe (23) s'étendant de manière inclinée par rapport à celle-ci, la deuxième partie de face de coupe (23) étant formée au moins partiellement sur la partie formant toit (11), et la première partie de face de coupe (22) et la deuxième partie de face de coupe (23) étant adjacentes l'une à l'autre au niveau d'une arête de face de coupe (24), la partie formant toit (11) présentant une épaisseur la plus grande (i) mesurée perpendiculairement à une direction d'avance (21) dans une vue de côté de l'élément de coupe (3, 53) avec une direction d'observation dans une direction d'aiguisage (29), qui s'étend parallèlement à la face de coupe (20) et parallèlement à la face d'appui (15, 55), comportant une première ligne de liaison (36) dans cette vue de côté, qui relie un point d'intersection (32) entre une arête supérieure (28) de la partie formant toit (11) et la face de coupe (20) à un point d'intersection (33) entre une ligne imaginaire (31), qui s'étend parallèlement à l'arête supérieure (28) de la partie formant toit (11) et à une distance (k) qui correspond au moins à l'épaisseur la plus grande (i), et la face de coupe (20), et comportant une deuxième ligne de liaison (37) dans cette vue de côté, qui relie un point d'intersection (34) entre l'arête supérieure (28) de la partie formant toit (11) et un déplacement imaginaire (44) de la face de coupe (20) parallèlement à la face d'appui (15, 55), à une position dans laquelle une pointe (14') de la dent de coupe (7) se situe perpendiculairement à la direction d'avance (21) au dessus d'un axe médian longitudinal (18) du point de support (17) arrière, à un point d'intersection (35) entre la ligne imaginaire (31) et le déplacement imaginaire (44) de la face de coupe (20),
**caractérisé en ce que** la face d'appui (15, 55) est orientée de telle sorte que la première ligne de liaison (36) et la deuxième ligne de liaison (37) s'étendent parallèlement l'une à l'autre.

2. Élément de coupe selon la revendication 1,
**caractérisé en ce que** la distance (k) de la ligne imaginaire (31) à l'arête supérieure (28) de la partie formant toit (11) est supérieure d'au moins 0,8 mm à l'épaisseur la plus grande (i) de la partie formant toit (11).

3. Élément de coupe selon la revendication 1 ou 2,
**caractérisé en ce que** la longueur (d), mesurée dans la direction d'avance (21), de la face d'appui (15, 55) vaut au moins 3 mm.

4. Élément de coupe selon la revendication 3,
**caractérisé en ce que** la face d'appui (15) forme avec le plan de points de support (19) un angle de moins de 5° dans ladite vue de côté.

5. Élément de coupe selon l'une des revendications 1 à 4,
**caractérisé en ce que** les axes médians longitudinaux (18) des points de support (16, 17) se situent dans un plan de points de support (19).

6. Élément de coupe selon la revendication 5,
**caractérisé en ce que** la première ligne de liaison (36) forme avec le plan de points de support (19) un angle de coupe (ε) de moins de 90° mesuré sur le côté opposé à la partie formant toit (11).

7. Élément de coupe selon la revendication 5 ou 6,
**caractérisé en ce que** la face d'appui (15, 55) forme avec le plan de points de support (19) un angle de moins de 5° dans une direction d'observation dans la direction d'avance (21).

8. Élément de coupe selon l'une des revendications 5 à 7,
**caractérisé en ce qu'**un limiteur de profondeur (8) est disposé en avant de la dent de coupe (7) et **en ce qu'**un évidement (9) est formé entre la dent de coupe (7) et le limiteur de profondeur (8), l'évidement (9) étant limité au moins partiellement par la face d'appui (15, 55) en direction du plan de points de support (19).

9. Chaîne de sciage comportant un élément de coupe selon l'une des revendications 6 à 8 et comportant un élément de liaison (4) qui est disposé à côté de l'élément de coupe (3, 53) par rapport à la direction d'avance (21), l'élément de liaison (4) présentant un côté supérieur (38), la distance (f) du côté supérieur (38) de l'élément de liaison (4) au plan de points de support (19) étant inférieure à la distance (g) de la face d'appui (15, 55) au plan de points de support (19).

10. Lime destinée à limer une dent de coupe d'une chaîne de sciage, la lime (40, 45) présentant une face de guidage brute (41, 41', 41", 46) dans une section transversale et au moins une première face de lime (42) adjacente à la face de guidage (41, 41', 41", 46) dans la direction périphérique, la face de guidage brute (41, 41', 41", 46) s'étendant sur au moins 1/6 de la périphérie de la lime (40, 45) dans cette section transversale,
**caractérisée en ce que** la lime (40) présente une deuxième face de lime (43) adjacente à la première face de lime (42) dans la direction périphérique, la face de guidage (41, 41', 41 ") formant avec la première face de lime (42) un premier angle (α') qui vaut plus de 90°, et la face de guidage (41, 41', 41") formant avec la deuxième face de lime (43) un deuxième angle (β') qui vaut moins de 90°.

11. Lime selon la revendication 10,
**caractérisée en ce que** la largeur (w) de la lime (40, 45) mesurée parallèlement à la face de guidage (41, 41', 41", 46) augmente dans au moins une région de la section transversale de la lime (40, 45) au fur et à mesure que la distance à la face de guidage (41, 41', 41", 46) augmente.
